# EUROPEAN PATENT SPECIFICATION

(11) **EP 4 190 092 B1**
(45) Date of publication and mention of the grant of the patent: **30.09.2026**
(21) Application number: 20947645.6
(22) Date of filing: 30.07.2020
(51) Int. Cl.: H04L 5/00, H04W 72/1273, H04W 28/18, H04W 36/18, H04B 1/00, H04B 7/08, H02J 50/80, H04W 8/24

(54) **INTER-BAND DOWNLINK CARRIER AGGREGATION WITH RECEPTION SWITCHING FOR A REDUCED CAPABILITY USER EQUIPMENT**
INTERBAND-DOWNLINK-TRÄGERAGGREGATION MIT EMPFANGSUMSCHALTUNG FÜR EIN BENUTZERGERÄT MIT REDUZIERTER KAPAZITÄT
REGROUPEMENT DE PORTEUSES DE LIAISON DESCENDANTE ENTRE BANDES AVEC COMMUTATION DE RÉCEPTION POUR UN ÉQUIPEMENT D'UTILISATEUR À CAPACITÉ RÉDUITE

(43) Date of publication of application: 07.06.2023
(73) Proprietor: QUALCOMM INCORPORATED, San Diego, California 92121-1714 (US)
(72) Inventor: WEI, Chao, San Diego, California 92121-1714 (US); HAO, Chenxi, San Diego, California 92121-1714 (US); XU, Hao, San Diego, California 92121-1714 (US); DAI, Jing, San Diego, California 92121-1714 (US); LI, Qiaoyu, San Diego, California 92121-1714 (US); HUANG, Min, San Diego, California 92121-1714 (US); CHEN, Wanshi, San Diego, California 92121-1714 (US)
(74) Representative: Bardehle Pagenberg Partnerschaft mbB Patentanwälte Rechtsanwälte
(86) International application number: PCT/CN2020/105745
(87) International publication number: WO 2022/021196

(56) References cited:
- EP-A1- 2 996 418
- WO-A1-2017/193380
- WO-A1-2019/169387
- WO-A1-2022/000249
- CN-A- 102 291 711
- CN-A- 102 932 927
- CN-A- 104 067 554
- US-A1- 2016 302 203
- US-A1- 2019 253 945
- NTT DOCOMO, INC.: "CR to 36.306 on UE capabilities for Rel-10 LTE features", 3GPP DRAFT; R2-113163, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Barcelona, Spain; 20110509, 3 May 2011 (2011-05-03), Mobile Competence Centre ; 650, route des Lucioles ; F-06921 Sophia-Antipolis Cedex ; France , XP050495344

## Description

### BACKGROUND

### Technical Field

The present disclosure relates generally to communication systems, and more particularly, to non-concurrent inter-band downlink carrier aggregation with reception switching.

### Introduction

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is 5G New Radio (NR). 5G NR is part of a continuous mobile broadband evolution promulgated by Third Generation Partnership Project (3GPP) to meet new requirements associated with latency, reliability, security, scalability (e.g., with Internet of Things (IoT)), and other requirements. 5G NR includes services associated with enhanced mobile broadband (eMBB), massive machine type communications (mMTC), and ultra-reliable low latency communications (URLLC). Some aspects of 5G NR may be based on the 4G Long Term Evolution (LTE) standard. There exists a need for further improvements in 5G NR technology. These improvements may also be applicable to other multi-access technologies and the telecommunication standards that employ these technologies.

WO 2022/000249 A1 was filed on June 30, 2020 (before the priority date of July 30, 2020 of the present application) and published on January 6, 2022 (after the priority date) and discloses methods for configuring, based on capability of the user equipment (UE) in switching among multiple component carriers (CCs), the UEs for communications with multiple activated CCs. For example, the network may configure the UE with a number of activated CCs that exceeds a number of CCs supported by the UE for simultaneous connections, such that the UE quickly switches among the activated CCs. The UE can thus effectively utilize more operating bands than the number allowed for simultaneous connections using inter-band carrier aggregations.

US 2016/302203 A1 discloses a base station configuring component carriers to user equipment (UE). The base station determines one or more component carriers to configure based on the UE carrier aggregation capability and sends a first configuration signaling to configure the UE with the component carriers in one or more component carrier sets. The base station configures each of the component carrier sets with a first common parameters and operations set and sends a second configuration signaling to configure the component carrier sets of the UE with the first common parameters and operations set. The base station then sends a third configuration signaling to configure each of the component carriers in the UE with a second parameters and operations set.

EP 2 996 418 A1 discloses a carrier switching method, a base station, and user equipment, where the method includes: determining, according to carrier switching capability information of user equipment UE, a carrier switching policy according to which the UE performs carrier switching; and sending carrier switching indication information to the UE, where the carrier switching indication information is used for indicating the carrier switching policy, so that the UE performs carrier switching according to the carrier switching policy. In the carrier switching method, the base station and the user equipment according to embodiments of the present invention, the UE having no carrier aggregation capability is enabled to dynamically perform switching between at least two carriers, so that quality of service of a service of the UE can be improved, user experience can be improved, and system performance can be improved.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

A base station may configure a user equipment (UE) with downlink carrier aggregation (CA) for simultaneous reception on multiple component carriers (CCs). The UE may have a number of receive chains for each CC that is different depending on a frequency band or a UE capability. For example, the UE may have four receive chains for a higher frequency band and two receive chains for a lower frequency band. Aspects presented herein provide for a UE to provide capability information to a base station indicating a reduced capability for inter-band CA with receive chain switching. The base station may then communicate with the UE according to the capability of the UE. The aspects presented herein enable reduced cost and reduced complexity for a reduced capability UE that reuses the same radio frequency (RF) chain or RF component for different operating bands for non-simultaneous transmission and reception.

As defined in claims 1, 6 and 14, a method, a computer executable code, and an apparatus are provided. In some examples, the apparatus may be a UE. The apparatus transmits a UE capability to a base station, the UE capability indicating a fully non-concurrent capability or a partially non-concurrent capability for inter-band downlink carrier aggregation with reception switching. Then, the apparatus monitors for downlink communication from the base station based on the UE capability.

As defined in claims 8, 12 and 14, a method, a computer executable code, and an apparatus are provided. In some examples, the apparatus may be a base station. The apparatus receives, from a UE, a UE capability indicating a fully non-concurrent capability or a partially non-concurrent capability for inter-band downlink carrier aggregation with reception switching. The apparatus then transmits the downlink communication to the UE based on the UE capability.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects.

### BRIEF DESCRIPTION OF THE DRAWINGS

FIG. 1 is a diagram illustrating an example of a wireless communications system and an access network.
FIG. 2A is a diagram illustrating an example of a first frame, in accordance with various aspects of the present disclosure.
FIG. 2B is a diagram illustrating an example of DL channels within a subframe, in accordance with various aspects of the present disclosure.
FIG. 2C is a diagram illustrating an example of a second frame, in accordance with various aspects of the present disclosure.
FIG. 2D is a diagram illustrating an example of UL channels within a subframe, in accordance with various aspects of the present disclosure.
FIG. 3 is a diagram illustrating an example of a base station and user equipment (UE) in an access network.
FIG. 4 is a diagram 400 that illustrates types of communication that may support higher capability devices and reduced capability devices.
FIG. 5A illustrates a receive chain for fully non-concurrent inter-band downlink CA with receive chain switching.
FIG. 5B illustrates a receive chain for partially non-concurrent inter-band downlink CA with receive chain switching.
FIG. 6 illustrates an example communication flow including fully non-concurrent inter-band downlink CA with receive chain switching.
FIG. 7 illustrates an example of reserved SCell resources for non-concurrent inter-band downlink CA with receive chain switching.
FIG. 8 illustrates an example communication flow including partially non-concurrent inter-band downlink CA with receive chain switching.
FIG. 9 illustrates an example of channel state information report settings in connection with non-concurrent inter-band downlink CA with receive chain switching.
FIG. 10 is a flowchart of a method of wireless communication at a UE.
FIG. 11 is a diagram illustrating an example of a hardware implementation for an example apparatus.
FIG. 12 is a flowchart of a method of wireless communication at a base station.
FIG. 13 is a diagram illustrating an example of a hardware implementation for an example apparatus.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunication systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example embodiments, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

A base station may configure a UE with downlink CA for simultaneous reception on multiple CC. The UE may have a number of receive chains for each CC that is different depending on a frequency band or a UE capability. For example, the UE may have four receive chains for a higher frequency band and two receive chains for a lower frequency band. Aspects presented herein provide for a UE to provide capability information to a base station indicating a reduced capability for inter-band CA with receive chain switching. The base station may then communicate with the UE according to the capability of the UE. The aspects presented herein enable reduced cost and reduced complexity for a reduced capability UE that reuses the same RF chain or RF component for different operating bands for non-simultaneous transmission and reception.

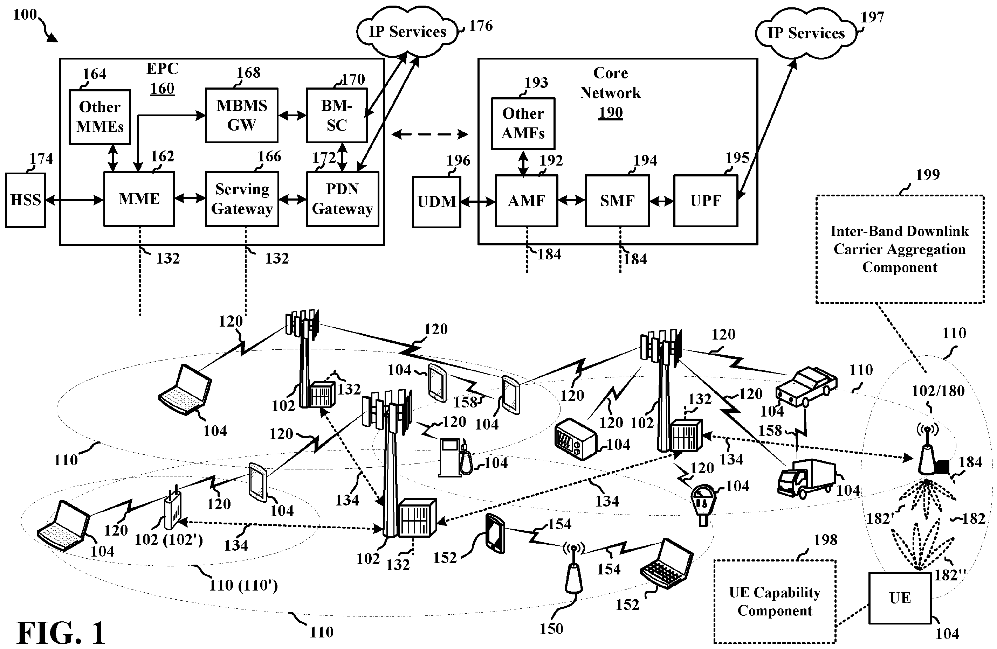

FIG. 1 is a diagram illustrating an example of a wireless communications system and an access network 100. The wireless communications system (also referred to as a wireless wide area network (WWAN)) includes base stations 1 02, UEs 104, an Evolved Packet Core (EPC) 160, and another core network 190 (e.g., a 5G Core (5GC)). A UE 104 may include a UE capability component 198 configured to transmit a UE capability to a base station 102 or 180, the UE capability indicating a fully non-concurrent capability or a partially non-concurrent capability for inter-band downlink carrier aggregation with reception switching and to monitor for downlink communication from the base station based on the UE capability. Similarly, the base station 102 or 180 may include an inter-band downlink carrier aggregation component 199 that is configured to receive, from the UE 104, a UE capability indicating a fully non-concurrent capability or a partially non-concurrent capability for inter-band downlink carrier aggregation with reception switching and to transmit downlink communication to the UE 104 based on the UE capability.

Although the following description may include examples based on 5G NR, the concepts described herein may be applicable to other similar areas, such as LTE, LTE-A, CDMA, GSM, and other wireless technologies.

The base stations 102 may include macrocells (high power cellular base station) and/or small cells (low power cellular base station). The macrocells include base stations. The small cells include femtocells, picocells, and microcells.

The base stations 102 configured for 4G LTE (collectively referred to as Evolved Universal Mobile Telecommunications System (UMTS) Terrestrial Radio Access Network (E-UTRAN)) may interface with the EPC 160 through first backhaul links 132 (e.g., S1 interface). The base stations 102 configured for 5G NR (collectively referred to as Next Generation RAN (NG-RAN)) may interface with core network 190 through second backhaul links 184. In addition to other functions, the base stations 102 may perform one or more of the following functions: transfer of user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, radio access network (RAN) sharing, multimedia broadcast multicast service (MBMS), subscriber and equipment trace, RAN information management (RIM), paging, positioning, and delivery of warning messages. The base stations 102 may communicate directly or indirectly (e.g., through the EPC 160 or core network 190) with each other over third backhaul links 134 (e.g., X2 interface). The first backhaul links 132, the second backhaul links 184, and the third backhaul links 134 may be wired or wireless.

The base stations 102 may wirelessly communicate with the UEs 104. Each of the base stations 102 may provide communication coverage for a respective geographic coverage area 110. There may be overlapping geographic coverage areas 110. For example, the small cell 102' may have a coverage area 110' that overlaps the coverage area 110 of one or more macro base stations 102. A network that includes both small cell and macrocells may be known as a heterogeneous network. A heterogeneous network may also include Home Evolved Node Bs (eNBs) (HeNBs), which may provide service to a restricted group known as a closed subscriber group (CSG). The communication links 120 between the base stations 102 and the UEs 104 may include uplink (UL) (also referred to as reverse link) transmissions from a UE 104 to a base station 102 and/or downlink (DL) (also referred to as forward link) transmissions from a base station 102 to a UE 104. The communication links 120 may use multiple-input and multiple-output (MIMO) antenna technology, including spatial multiplexing, beamforming, and/or transmit diversity. The communication links may be through one or more carriers. The base stations 102 / UEs 104 may use spectrum up to Y MHz (e.g., 5, 10, 15, 20, 100, 400, etc. MHz) bandwidth per carrier allocated in a carrier aggregation of up to a total of *Yx* MHz (*x* component carriers) used for transmission in each direction. The carriers may or may not be adjacent to each other. Allocation of carriers may be asymmetric with respect to DL and UL (e.g., more or fewer carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

Certain UEs 104 may communicate with each other using device-to-device (D2D) communication link 158. The D2D communication link 158 may use the DL/UL WWAN spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, WiMedia, Bluetooth, ZigBee, Wi-Fi based on the Institute of Electrical and Electronics Engineers (IEEE) 802.11 standard, LTE, or NR.

The wireless communications system may further include a Wi-Fi access point (AP) 150 in communication with Wi-Fi stations (STAs) 152 via communication links 154, e.g., in a 5 GHz unlicensed frequency spectrum or the like. When communicating in an unlicensed frequency spectrum, the STAs 152 / AP 150 may perform a clear channel assessment (CCA) prior to communicating in order to determine whether the channel is available.

The small cell 102' may operate in a licensed and/or an unlicensed frequency spectrum. When operating in an unlicensed frequency spectrum, the small cell 102' may employ NR and use the same unlicensed frequency spectrum (e.g., 5 GHz, or the like) as used by the Wi-Fi AP 150. The small cell 102', employing NR in an unlicensed frequency spectrum, may boost coverage to and/or increase capacity of the access network.

The electromagnetic spectrum is often subdivided, based on frequency/wavelength, into various classes, bands, channels, etc. In 5G NR, two initial operating bands have been identified as frequency range designations FR1 (410 MHz - 7.125 GHz) and FR2 (24.25 GHz - 52.6 GHz). The frequencies between FR1 and FR2 are often referred to as mid-band frequencies. Although a portion of FR1 is greater than 6 GHz, FR1 is often referred to (interchangeably) as a "sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "millimeter wave" or the like if used herein may broadly represent frequencies that may include mid-band frequencies, may be within FR2, or may be within the EHF band.

A base station 102, whether a small cell 102' or a large cell (e.g., macro base station), may include and/or be referred to as an eNB, gNodeB (gNB), or another type of base station. Some base stations, such as gNB 180 may operate in a traditional sub 6 GHz spectrum, in millimeter wave frequencies, and/or near millimeter wave frequencies in communication with the UE 104. When the gNB 180 operates in millimeter wave or near millimeter wave frequencies, the gNB 180 may be referred to as a millimeter wave base station. The millimeter wave base station 180 may utilize beamforming 182 with the UE 104 to compensate for the path loss and short range. The base station 180 and the UE 104 may each include a plurality of antennas, such as antenna elements, antenna panels, and/or antenna arrays to facilitate the beamforming.

The base station 180 may transmit a beamformed signal to the UE 104 in one or more transmit directions 182'. The UE 104 may receive the beamformed signal from the base station 180 in one or more receive directions 182". The UE 104 may also transmit a beamformed signal to the base station 180 in one or more transmit directions. The base station 180 may receive the beamformed signal from the UE 104 in one or more receive directions. The base station 180 / UE 104 may perform beam training to determine the best receive and transmit directions for each of the base station 180 / UE 104. The transmit and receive directions for the base station 180 may or may not be the same. The transmit and receive directions for the UE 104 may or may not be the same.

The EPC 160 may include a Mobility Management Entity (MME) 162, other MMEs 164, a Serving Gateway 166, a Multimedia Broadcast Multicast Service (MBMS) Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, which itself is connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a PS Streaming Service, and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

The core network 190 may include an Access and Mobility Management Function (AMF) 192, other AMFs 193, a Session Management Function (SMF) 194, and a User Plane Function (UPF) 195. The AMF 192 may be in communication with a Unified Data Management (UDM) 196. The AMF 192 is the control node that processes the signaling between the UEs 104 and the core network 190. Generally, the AMF 192 provides QoS flow and session management. All user Internet protocol (IP) packets are transferred through the UPF 195. The UPF 195 provides UE IP address allocation as well as other functions. The UPF 195 is connected to the IP Services 197. The IP Services 197 may include the Internet, an intranet, an IP Multimedia Subsystem (IMS), a Packet Switch (PS) Streaming (PSS) Service, and/or other IP services.

The base station may include and/or be referred to as a gNB, Node B, eNB, an access point, a base transceiver station, a radio base station, a radio transceiver, a transceiver function, a basic service set (BSS), an extended service set (ESS), a transmit reception point (TRP), or some other suitable terminology. The base station 102 provides an access point to the EPC 160 or core network 190 for a UE 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as IoT devices (e.g., parking meter, gas pump, toaster, vehicles, heart monitor, etc.). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

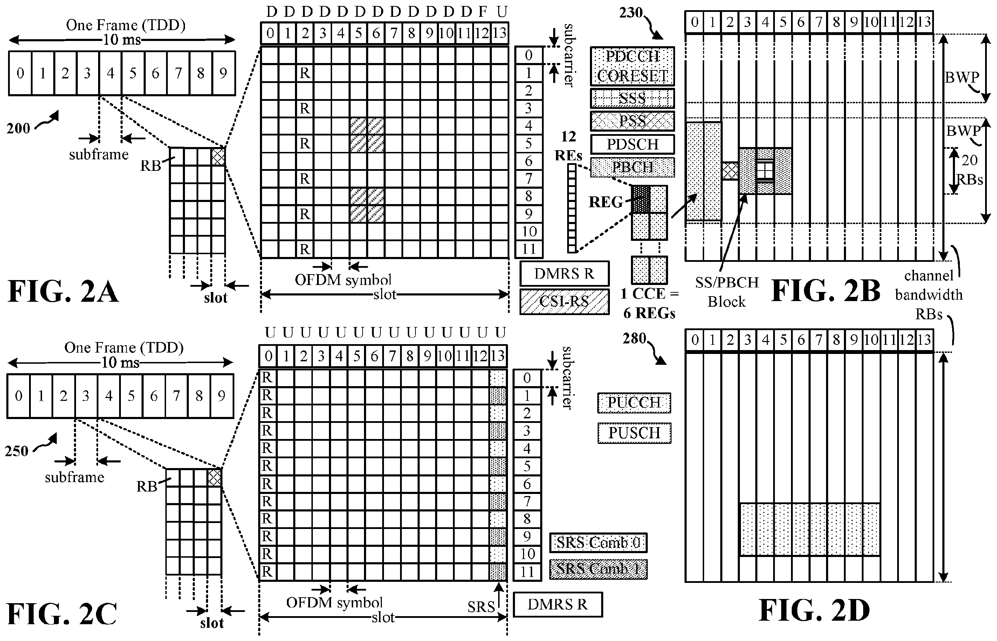

FIG. 2A is a diagram 200 illustrating an example of a first subframe within a 5G NR frame structure. FIG. 2B is a diagram 230 illustrating an example of DL channels within a 5G NR subframe. FIG. 2C is a diagram 250 illustrating an example of a second subframe within a 5G NR frame structure. FIG. 2D is a diagram 280 illustrating an example of UL channels within a 5G NR subframe. The 5G NR frame structure may be frequency division duplexed (FDD) in which for a particular set of subcarriers (carrier system bandwidth), subframes within the set of subcarriers are dedicated for either DL or UL, or may be time division duplexed (TDD) in which for a particular set of subcarriers (carrier system bandwidth), subframes within the set of subcarriers are dedicated for both DL and UL. In the examples provided by FIGs. 2A, 2C, the 5G NR frame structure is assumed to be TDD, with subframe 4 being configured with slot format 28 (with mostly DL), where D is DL, U is UL, and F is flexible for use between DL/UL, and subframe 3 being configured with slot format 1 (with all UL). While subframes 3, 4 are shown with slot formats 1, 28, respectively, any particular subframe may be configured with any of the various available slot formats 0-61. Slot formats 0, 1 are all DL, UL, respectively. Other slot formats 2-61 include a mix of DL, UL, and flexible symbols. UEs are configured with the slot format (dynamically through DL control information (DCI), or semi-statically/statically through radio resource control (RRC) signaling) through a received slot format indicator (SFI). Note that the description *infra* applies also to a 5G NR frame structure that is TDD.

Other wireless communication technologies may have a different frame structures and/or different channel. A frame (10 ms) may be divided into 10 equally sized subframes (1 ms). Each subframe may include one or more time slots. Subframes may also include mini-slots, which may include 7, 4, or 2 symbols. Each slot may include 7 or 14 symbols, depending on the slot configuration. For slot configuration 0, each slot may include 14 symbols, and for slot configuration 1, each slot may include 7 symbols. The symbols on DL may be cyclic prefix (CP) OFDM (CP-OFDM) symbols. The symbols on UL may be CP-OFDM symbols (for high throughput scenarios) or discrete Fourier transform (DFT) spread OFDM (DFT-s-OFDM) symbols (also referred to as single carrier frequency-division multiple access (SC-FDMA) symbols) (for power limited scenarios; limited to a single stream transmission). The number of slots within a subframe is based on the slot configuration and the numerology. For slot configuration 0, different numerologies µ 0 to 4 allow for 1, 2, 4, 8, and 16 slots, respectively, per subframe. For slot configuration 1, different numerologies 0 to 2 allow for 2, 4, and 8 slots, respectively, per subframe. Accordingly, for slot configuration 0 and numerology µ, there are 14 symbols/slot and 2^{µ} slots/subframe. The subcarrier spacing and symbol length/duration are a function of the numerology. The subcarrier spacing may be equal to 2*^{µ}* * 1,5 kHz, where *µ* is the numerology 0 to 4. As such, the numerology µ=0 has a subcarrier spacing of 15 kHz and the numerology µ=4 has a subcarrier spacing of 240 kHz. The symbol length/duration is inversely related to the subcarrier spacing. FIGs. 2A-2D provide an example of slot configuration 0 with 14 symbols per slot and numerology µ=2 with 4 slots per subframe. The slot duration is 0.25 ms, the subcarrier spacing is 60 kHz, and the symbol duration is approximately 16.67 µs. Within a set of frames, there may be one or more different bandwidth parts (BWPs) (see FIG. 2B) that are frequency division multiplexed. Each BWP may have a particular numerology.

A resource grid may be used to represent the frame structure. Each time slot includes a resource block (RB) (also referred to as physical RBs (PRBs)) that extends 12 consecutive subcarriers. The resource grid is divided into multiple resource elements (REs). The number of bits carried by each RE depends on the modulation scheme.

As illustrated in FIG. 2A, some of the REs carry reference (pilot) signals (RS) for the UE. The RS may include demodulation RS (DM-RS) (indicated as R for one particular configuration, but other DM-RS configurations are possible) and channel state information reference signals (CSI-RS) for channel estimation at the UE. The RS may also include beam measurement RS (BRS), beam refinement RS (BRRS), and phase tracking RS (PT-RS).

FIG. 2B illustrates an example of various DL channels within a subframe of a frame. The physical downlink control channel (PDCCH) carries DCI within one or more control channel elements (CCEs) (e.g., 1, 2, 4, 8, or 16 CCEs), each CCE including six RE groups (REGs), each REG including 12 consecutive REs in an OFDM symbol of an RB. A PDCCH within one BWP may be referred to as a control resource set (CORESET). A UE is configured to monitor PDCCH candidates in a PDCCH search space (e.g., common search space, UE-specific search space) during PDCCH monitoring occasions on the CORESET, where the PDCCH candidates have different DCI formats and different aggregation levels. Additional BWPs may be located at greater and/or lower frequencies across the channel bandwidth. A primary synchronization signal (PSS) may be within symbol 2 of particular subframes of a frame. The PSS is used by a UE 104 to determine subframe/symbol timing and a physical layer identity. A secondary synchronization signal (SSS) may be within symbol 4 of particular subframes of a frame. The SSS is used by a UE to determine a physical layer cell identity group number and radio frame timing. Based on the physical layer identity and the physical layer cell identity group number, the UE can determine a physical cell identifier (PCI). Based on the PCI, the UE can determine the locations of the aforementioned DM-RS. The physical broadcast channel (PBCH), which carries a master information block (MIB), may be logically grouped with the PSS and SSS to form a synchronization signal (SS)/PBCH block (also referred to as SS block (SSB)). The MIB provides a number of RBs in the system bandwidth and a system frame number (SFN). The physical downlink shared channel (PDSCH) carries user data, broadcast system information not transmitted through the PBCH such as system information blocks (SIBs), and paging messages.

As illustrated in FIG. 2C, some of the REs carry DM-RS (indicated as R for one particular configuration, but other DM-RS configurations are possible) for channel estimation at the base station. The UE may transmit DM-RS for the physical uplink control channel (PUCCH) and DM-RS for the physical uplink shared channel (PUSCH). The PUSCH DM-RS may be transmitted in the first one or two symbols of the PUSCH. The PUCCH DM-RS may be transmitted in different configurations depending on whether short or long PUCCHs are transmitted and depending on the particular PUCCH format used. The UE may transmit sounding reference signals (SRS). The SRS may be transmitted in the last symbol of a subframe. The SRS may have a comb structure, and a UE may transmit SRS on one of the combs. The SRS may be used by a base station for channel quality estimation to enable frequency-dependent scheduling on the UL.

FIG. 2D illustrates an example of various UL channels within a subframe of a frame. The PUCCH may be located as indicated in one configuration. The PUCCH carries uplink control information (UCI), such as scheduling requests, a channel quality indicator (CQI), a precoding matrix indicator (PMI), a rank indicator (RI), and hybrid automatic repeat request (HARQ) ACK/NACK feedback. The PUSCH carries data, and may additionally be used to carry a buffer status report (BSR), a power headroom report (PHR), and/or UCI.

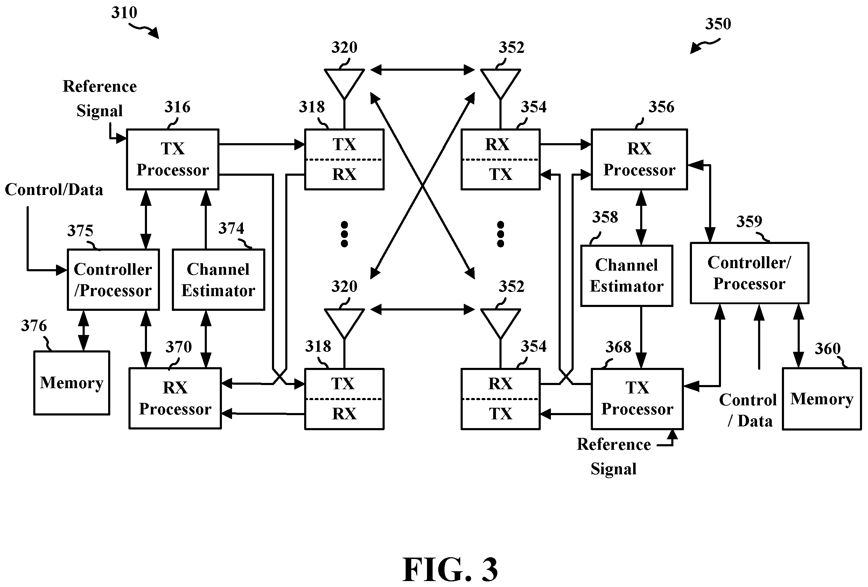

FIG. 3 is a block diagram of a base station 310 in communication with a UE 350 in an access network. In the DL, IP packets from the EPC 160 may be provided to a controller/processor 375. The controller/processor 375 implements layer 3 and layer 2 functionality. Layer 3 includes a radio resource control (RRC) layer, and layer 2 includes a service data adaptation protocol (SDAP) layer, a packet data convergence protocol (PDCP) layer, a radio link control (RLC) layer, and a medium access control (MAC) layer. The controller/processor 375 provides RRC layer functionality associated with broadcasting of system information (e.g., MIB, SIBs), RRC connection control (e.g., RRC connection paging, RRC connection establishment, RRC connection modification, and RRC connection release), inter radio access technology (RAT) mobility, and measurement configuration for UE measurement reporting; PDCP layer functionality associated with header compression / decompression, security (ciphering, deciphering, integrity protection, integrity verification), and handover support functions; RLC layer functionality associated with the transfer of upper layer packet data units (PDUs), error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through HARQ, priority handling, and logical channel prioritization.

The transmit (TX) processor 316 and the receive (RX) processor 370 implement layer 1 functionality associated with various signal processing functions. Layer 1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 316 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 374 may be used to determine the coding and modulation scheme, as well as for spatial processing. The channel estimate may be derived from a reference signal and/or channel condition feedback transmitted by the UE 350. Each spatial stream may then be provided to a different antenna 320 via a separate transmitter 318 TX. Each transmitter 318 TX may modulate an RF carrier with a respective spatial stream for transmission.

At the UE 350, each receiver 354 RX receives a signal through its respective antenna 352. Each receiver 354 RX recovers information modulated onto an RF carrier and provides the information to the receive (RX) processor 356. The TX processor 368 and the RX processor 356 implement layer 1 functionality associated with various signal processing functions. The RX processor 356 may perform spatial processing on the information to recover any spatial streams destined for the UE 350. If multiple spatial streams are destined for the UE 350, they may be combined by the RX processor 356 into a single OFDM symbol stream. The RX processor 356 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 310. These soft decisions may be based on channel estimates computed by the channel estimator 358. The soft decisions are then decoded and deinterleaved to recover the data and control signals that were originally transmitted by the base station 310 on the physical channel. The data and control signals are then provided to the controller/processor 359, which implements layer 3 and layer 2 functionality.

The controller/processor 359 can be associated with a memory 360 that stores program codes and data. The memory 360 may be referred to as a computer-readable medium. In the UL, the controller/processor 359 provides demultiplexing between transport and logical channels, packet reassembly, deciphering, header decompression, and control signal processing to recover IP packets from the EPC 160. The controller/processor 359 is also responsible for error detection using an ACK and/or NACK protocol to support HARQ operations.

Similar to the functionality described in connection with the DL transmission by the base station 310, the controller/processor 359 provides RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 358 from a reference signal or feedback transmitted by the base station 310 may be used by the TX processor 368 to select the appropriate coding and modulation schemes, and to facilitate spatial processing. The spatial streams generated by the TX processor 368 may be provided to different antenna 352 via separate transmitters 354TX. Each transmitter 354TX may modulate an RF carrier with a respective spatial stream for transmission.

The UL transmission is processed at the base station 310 in a manner similar to that described in connection with the receiver function at the UE 350. Each receiver 318RX receives a signal through its respective antenna 320. Each receiver 318RX recovers information modulated onto an RF carrier and provides the information to a RX processor 370.

The controller/processor 375 can be associated with a memory 376 that stores program codes and data. The memory 376 may be referred to as a computer-readable medium. In the UL, the controller/processor 375 provides demultiplexing between transport and logical channels, packet reassembly, deciphering, header decompression, control signal processing to recover IP packets from the UE 350. IP packets from the controller/processor 375 may be provided to the EPC 160. The controller/processor 375 is also responsible for error detection using an ACK and/or NACK protocol to support HARQ operations.

At least one of the TX processor 368, the RX processor 356, and the controller/processor 359 may be configured to perform aspects in connection with the UE capability component 198 of FIG. 1, e.g., to provide information about a UE capability to the base station 310 indicating a fully non-concurrent capability or a partially non-concurrent capability for inter-band downlink carrier aggregation with reception switching.

At least one of the TX processor 316, the RX processor 370, and the controller/processor 375 may be configured to perform aspects in connection with the inter-band downlink carrier aggregation component 199 of FIG. 1, e.g., to transmit downlink communication to the UE 350 based on the UE capability.

Some aspects of wireless communication may support high capability devices. The aspects may provide a baseline for wireless communication that takes into consideration advanced and diverse requirements. Among others, examples of higher capability devices include premium smartphones, V2X devices, URLLC devices, eMBB devices, etc. In addition to higher capability devices wireless communication may support reduced capability devices. It may be beneficial for the wireless communication system to be scalable and deployable in a more efficient and cost-effective way. Examples of reduced capability devices may include wearables, industrial wireless sensor networks (IWSN), surveillance cameras, low-end smartphones, among others. For example, NR communication systems may support both higher capability devices and reduced capability devices. A reduced capability device may be referred to as an NR light device, a low-tier device, a lower tier device, etc. Reduced capability UEs may communicate based on various types of wireless communication. For example, smart wearables may transmit or receive communication based on low power wide area (LPWA) /mMTC, relaxed loT devices may transmit or receive communication based on URLLC, sensors/cameras may transmit or receive communication based on eMBB, etc.

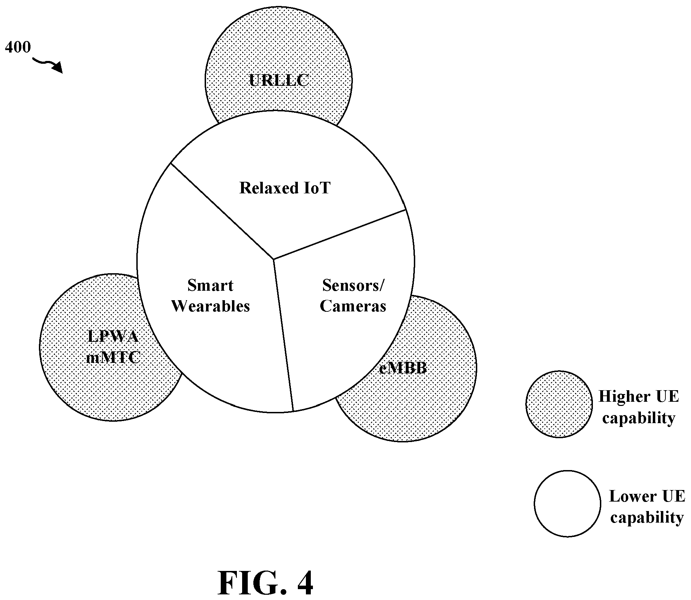

For some devices, a peak throughput, latency, or reliability may be relaxed to allow for greater power consumption efficiency, reduce system overhead, and provide cost improvements. A lower complexity UE or reduced capability may have smaller bandwidth capabilities, a reduced number of reception antennas, relaxed UE processing, or relaxed PDCCH monitoring. In some examples, a reduced capability UE may have an uplink transmission power of at least 10 dB less than that a higher capability UE. As another example, a reduced capability UE may have reduced transmission bandwidth or reception bandwidth than other UEs. For instance, a reduced capability UE may have a maximum operating bandwidth of 20M Hz for both transmission and reception, in contrast to other UEs which may have up to a 100 MHz bandwidth. As a further example, a reduced capability UE may have a reduced number of reception antennas in comparison to other UEs. For instance, a reduced capability UE may have only a single receive antenna and may experience a lower equivalent receive signal to noise ratio (SNR) in comparison to higher capability UEs that may have multiple antennas. Reduced capability UEs may also have reduced computational complexity than other UEs. FIG. 4 is a diagram 400 that illustrates an overlap for types of communication that may support higher capability devices and reduced capability devices.

It may be helpful for communication to be scalable and deployable in a more efficient and cost-effective way. For example, it may be possible to relax or reduce peak throughput, latency, and/or reliability requirements for the reduced capability devices. In some examples, reductions in power consumption, complexity, production cost, and/or reductions in system overhead may be prioritized. As an example, industrial wireless sensors may have an acceptable up to approximately 100 ms. In some safety related applications, the latency of industrial wireless sensors may be acceptable up to 10 ms or up to 5 ms. The data rate may be lower and may include more uplink traffic than downlink traffic. As another example, video surveillance devices may have an acceptable latency up to approximately 500 ms.

A base station may configure a UE with downlink CA to simultaneously receive on multiple CCs. The UE's available number of Rx chains for each CC may be different depending on a frequency band on which the downlink communication is being receive and/or based on a UE capability. For example, the UE may have four receive chains for receiving downlink communication on a higher frequency band and two receive chains for receiving downlink communication on a lower frequency band.

For a reduced capability UE, a downlink peak data rate (e.g. up to 150 Mbps) can be achieved without CA. However, inter-band CA may enable the UE to use different carriers to for different, complementing aspects. For example, a low frequency division duplex (FDD) band may provide better coverage and lower latency due to full uplink slots. A higher frequency time division duplex (TDD) band may have a larger bandwidth to accommodate an increased amount of UEs. Inter-band CA may also improve cell edge UE performance and network capacity by enabling dynamic offloading traffic between FDD and TDD serving cells without an inter-frequency handover. For example, a measurement gap required for inter-frequency handover measurement may be avoided through the use of inter-band CA rather than an inter-frequency handover.

A higher capability CA operation may increase the cost and complexity of RF components for a reduced capability UE, such as through increased number of receiver chains. Aspects presented herein enable a reduced capability UE to reduce such added RF component costs through RF component sharing. The reduced capability UE may reuse the same RF chain or RF component for non-simultaneous transmission and reception on different operating bands (e.g., frequency bands).

When the UE performs RF retuning from one carrier (e.g., one component carrier) to another carrier, the UE will stop an ongoing transmission. TDM based downlink CA operation may coordinate resources in the time domain, e.g., to avoid retuning during an ongoing transmission from the UE. A UE having 1Tx-2Tx switching for inter-band uplink CA with 2 Tx chains may experience a similar challenge in which is dynamically indicated with 1 or 2 Tx by DCI.

In contrast to uplink communication, in downlink there are cell specific signals/ channels (e.g. SSB, periodic CSI-RS) for the UE to monitor. Downlink control information (DCI) based dynamic slot allocation may lead to a UE not measuring such downlink signals or channels if the corresponding slot is not assigned with a receive chain. Additionally, or alternatively, DCI based dynamic slot allocation may lead to the base station sending DCI to trigger the UE to receive downlink signals on such slots for radio resource management (RRM), radio link monitoring (RLM), or CSI measurement.

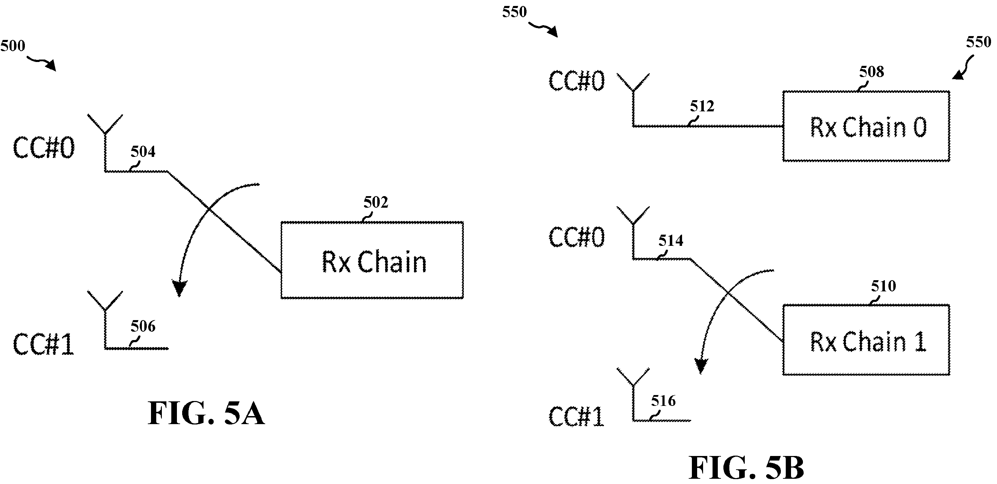

The present application provides aspects to support inter-band downlink CA with reception switching for a reduced capability UE. A first type, e.g., Type A, of inter-band downlink CA with receive chain switching may include fully non-concurrent downlink transmissions. FIG. 5A illustrates an example 500 of a receive chain 502 for fully non-concurrent reception of downlink transmissions. In FIG. 5A, a single receive chain 502 switches between antenna 504 and antenna 506. Although FIG. 5A illustrates only a single receive chain 502, the aspects presented herein may similarly be applied for a UE having two receive chains that are dynamically switched between two cells or two CCs (e.g., CC#0 and CC1) without simultaneous reception in different cells or on different CCs. The antenna 504 may be for communication on a first CC (e.g., CC#0 or a PCell), and the antenna 506 may be for communication on a second CC (e.g., CC#1 or a SCell). In some examples, the antenna 504 may be for communication at a lower frequency range, and the antenna 506 may be for communication at a higher frequency range. The UE may switch between using the single receive chain 502 to receive downlink communication in a first frequency band via the first antenna 504 and using the single receive chain 502 to receive downlink communication in a second frequency band via the second antenna 504. As the two antennas share a single receive chain, downlink communication cannot be received concurrently on both antennas 504 and 506. Downlink transmissions from the primary cell (PCell) and the secondary cell (SCell) for the UE may be transmitted at different times, e.g., in a time division multiplexed (TDM) manner in different slots. The mapping of the receive chain may be switched between (1,0) and (0,1) for the (PCell, SCell).

A second type, e.g., Type B, of inter-band downlink CA with receive chain switching may include partially non-concurrent downlink transmissions. FIG. 5B illustrates an example 550 of a set of receive chains 508 and 510 for partially non-concurrent reception of downlink transmissions. In FIG. 5B, a first receive chain 508 is associated with a single antenna 512 and a second receive chain 510 switches between antenna 514 and antenna 516. The receive chain may be fixed to the antenna 512. The antennas 512 and 514 may be for communication on a first CC (e.g., CC#0), and the antenna 516 may be for communication on a second CC (e.g., CC#1). CC#0 may be for a PCell and CC#1 may be for an SCell. The mapping of the receive chain may be switched between (2,0) and (1,1) for the (PCell, SCell).

As presented herein, the UE may signal to the base station a UE capability for Type A (e.g., fully non-concurrent) or Type B (partially non-concurrent) inter-band downlink CA with receive chain switching.

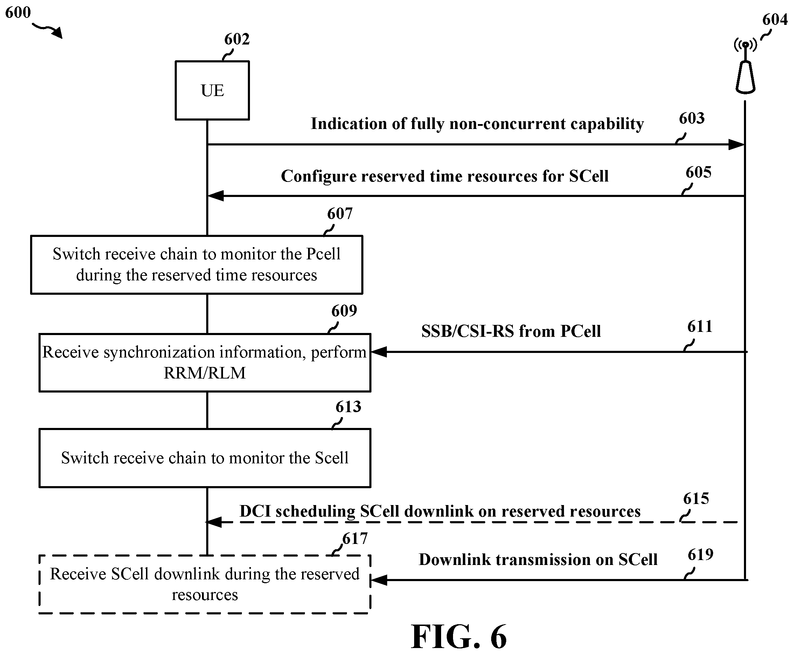

FIG. 6 illustrates an example communication flow 600 between a UE 602 and a base station 604 in which the UE transmits an indication informing the base station 604 that the UE supports Type A (e.g., fully non-concurrent) inter-band downlink CA with receive chain switching, such as illustrated in FIG. 5A. The indication 603 informs the base station 604 that the UE 602 is not capable of monitoring downlink communication on a PCell if base station 604 configures the corresponding slots for SCell reception at the UE. Thus, the UE may not monitor the PCell for SSB or a periodic CSI-RS for radio resource management (RRM) or radio link monitoring (RLM) in slots configured for SCell downlink reception. If the UE does not monitor the PCell SSB or periodic CSI-RS for RRM/RLM in order to update downlink measurements for the PCell, the UE may experience a downlink synchronization error or may use inaccurate uplink transmission power control that may degrade uplink transmissions for the PCell.

In response to receiving the indication 603 of the UE's capability for fully non-concurrent receive chain switching, the base station 604 may configure the UE 602 with a set of reserved time domain resources that are excluded/reserved from SCell downlink transmissions, e.g., in the configuration 605.

Based on the configuration 605 of the reserved time resources, the UE 602 may switch to monitor downlink communication from the PCell during the reserved time resources. In FIG. 5A, the UE may switch the receive chain 502 to receive via the antenna 504 for the PCell. In some examples, the UE 602 may switch, at 607, from receiving downlink communication on the SCell during the reserved resources without further indication from the base station 604. The set of reserved time resources may comprise slots for the PCell SSB and/or periodic CSI-RS 611 for RRM/RLM. The UE may receive the SSB/CSI-RS 611 to receive synchronization information or perform RRM/RLM for the PCell, at 609. After the reserved resources, the UE may switch the receive chain, at 613, to receive downlink communication scheduled on the SCell. In FIG. 5A, the UE may switch the receive chain 502 to receive via the antenna 506 for the SCell.

The reserved time resources may be configured, at 605, in radio resource control (RRC) signaling. In some examples, the base station 604 may provide dynamic signaling that indicates to the UE 602 whether to switch to the PCell during the reserved resources. For example, the base station may transmit downlink control information (DCI) 615 that indicates SCell scheduling in the set of reserved time resources. If the UE receives the DCI 615, the UE may receive downlink communication 619 in the SCell, at 617, and may skip monitoring for the SSB/CSI-RS in the PCell. If the UE does not receive the DCI 615, the UE switches the receive chain to monitor the PCell for measurement during the reserved resources.

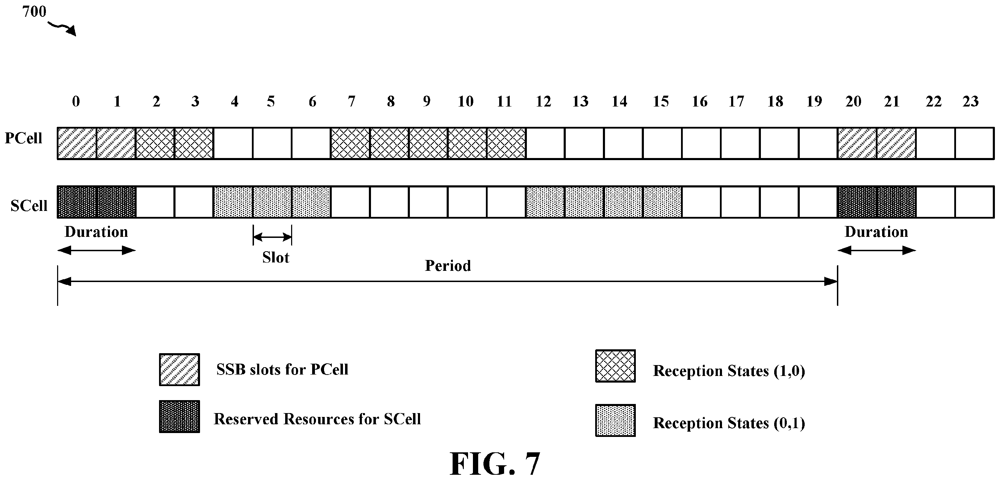

The set of reserved time domain resources in the SCell (e.g., configured at 605) may be based on the PCell SSB and/or periodic CSI-RS that the UE sues for RRM or RLM. The configuration 605 may indicate a periodicity of the reserved resources, such as a period of 10 ms, 20 ms, 40 ms, 80 ms, or 160 ms. The configuration 605 may indicate a start position for the reserved resources, e.g., in a granularity of 1 0 ms or a different period of time. The configuration 605 may indicate a duration for the reserved resources, e.g., a number of consecutive slots following the start position. FIG. 7 illustrates a time resource diagram 700 showing an example of resources for SSB on a PCell and reserved resources that are configured for the SCell that overlap in time with the SSB resources. Although FIG. 7 illustrates reserved resources being used in connection with Type A fully non-concurrent receive chain switching, in some examples, the aspects regarding reserved resources may be applied for Type B partially non-concurrent receive chain switching in which the UE switches the receive chains between states (2,0) and (1,1) in order to ensure that the UE uses both receive chains to receive the SSB and/or CSI-RS in the PCell.

In some examples, in order to provide for PCell reception and coverage, the UE may apply full time domain operation for the PCell and may switch to the SCell based on dynamic signaling. For example, the PCell may be configured as an anchor, and the UE may maintain the receive chain with a connection to the antenna for the PCell unless dynamic signaling (e.g., DCI) is received scheduling downlink communication on the SCell or otherwise indicating for the UE to switch the receive chain for downlink reception on the SCell. Following the scheduled downlink reception, the UE may return to the receive chain state for downlink reception on the PCell. Thus, the UE may remain on the PCell as the anchor cell and may apply a rule for temporarily switching the receive chain for downlink reception from the SCell. In some examples, dynamic DCI scheduling may override a periodic downlink reception configuration on the PCell. In other examples, UE may switch the receive chain to the SCell based on a periodic configuration on the SCell if the PCell is inactive. If the PCell is active, the UE may maintain the receive chain for the PCell.

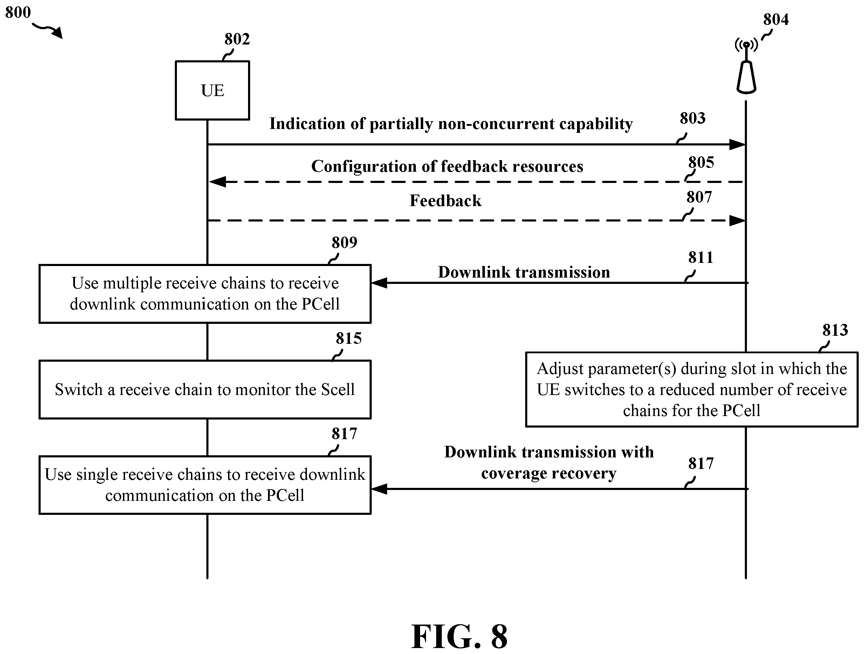

FIG. 8 illustrates an example communication flow 800 between a UE 802 and a base station 804 in which the UE 802 transmits an indication 803 informing the base station 804 that the UE 802 supports Type B (e.g., partially non-concurrent) inter-band downlink CA with receive chain switching, such as described in connection with FIG. 5B. In contrast to the Type A (fully non-concurrent), in Type B (partially non-concurrent) receive chain switching for inter-band downlink CA, the UE 802 may dynamically switch between using one receive chain (e.g., receive chain 508) and using two receive chains (e.g., receive chains 508 and 510) for the PCell. The UE 802 may experience a coverage loss for the PCell in slots in which the UE 802 uses a single receive chain for receiving downlink communication from the PCell.

As illustrated at 813, the base station 804 may adjust one or more parameters of a downlink transmission in the slots when the UE switches, at 815, to using a reduced number of receive chains for the PCell in order to improve coverage for the PCell and to compensate for the coverage loss due to the receive chain reduction, e.g., from two receive chains to one receive chain.

Among other examples, the base station 804 may apply a coverage recovery approach, at 813, by adjusting one or more parameters of the downlink transmission such as transmission power boosting for the downlink transmission, repetition of the downlink transmission, using a lower modulation and coding scheme (MCS) and/or transport block size (TBS) for the downlink transmission in slots in which the UE will use a reduced number of receive chains to receive the downlink transmission.

In some examples, the base station may apply a coverage recovery approach (e.g., adjust one or more parameter of the downlink transmission) based on feedback from the UE. For example, the UE 802 may transmit feedback 807 reporting a channel quality indicator (CQI)/SNR difference between reception on the PCell with multiple receive chains and with a single receive chain (or with a larger number of receive chains and a reduced number of receive chains). The base station 804 may apply the one or more parameters, at 813, in response to the feedback 807 from the UE 802.

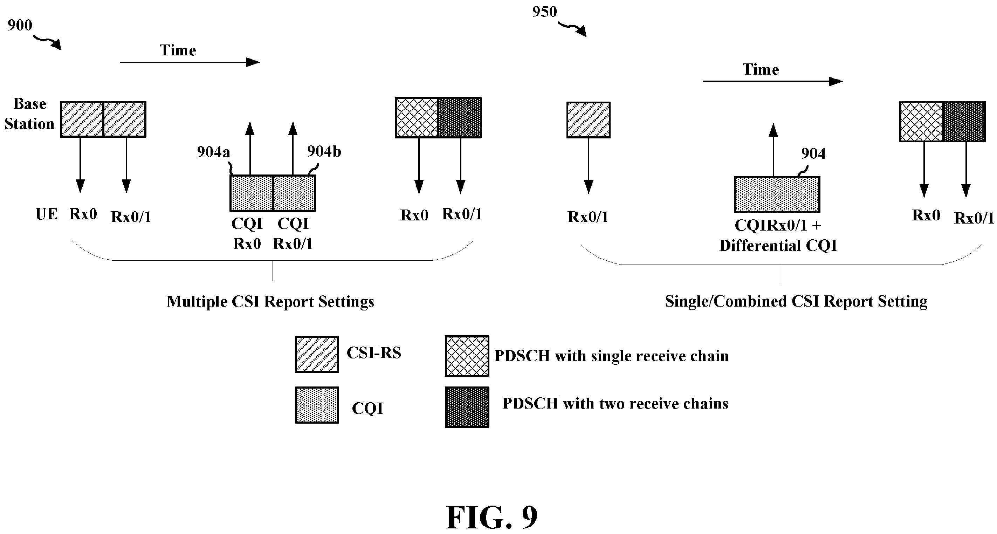

In some examples, the base station may configure the UE, at 805, with at least two CSI reporting settings, one for reporting CSI for downlink reception with a single receive chain and the other for reporting CSI for downlink reception with multiple receive chains. In transmitting the feedback 807, the UE 802 may report a first CQI for the single receive chain measurement in the first CSI reporting setting and a second CQI for the multiple receive chain measurement in the second CSI reporting setting. For example, the UE 802 may use multiple receive chains to receive the downlink communication 811 on the PCell, at 809. The two reported CQI may have the same rank, and the base station 804 may use the CQI difference between the two reported CQI to determine a coverage recovery target. For example, the base station 804 may use the difference between the two reported CQI to determine an increased transmission power, repetition parameter, and/or reduced MCS/TBS for downlink transmission 817 from the PCell to the UE 802 in slots in which the UE uses a single receive chain, or a reduced number of receive chains, at 817, to receive downlink transmission from the PCell. FIG. 9 illustrates an example 900 showing a configuration of two CSI report settings 904a and 904b.

In some examples, the base station 804 may configure the UE 802, at 805, with a single CSI reporting setting. The UE 802 may transmit the feedback 807 by reporting the CSI measured using multiple receive chains (e.g., two receive chains) along with a differential CQI for the measurement using a reduced number of receive chains (e.g., a single receive chain). The differential CQI may be indicated relative to the two receive chain CSI or CQI measurement. The base station 804 may use the differential reported by the UE 802 to determine an increased transmission power, repetition parameter, and/or reduced MCS/TBS for downlink transmission 817 from the PCell to the UE 802 in slots in which the UE uses a single receive chain, or a reduced number of receive chains, at 817, to receive downlink transmission from the PCell. FIG. 9 illustrates an example 950 showing a configuration of a single, combined CSI report settings 904 in which the UE reports a CQI and a differential.

In some examples, the UE may not be expected to monitor PDCCH in both the PCell and SCell in the same slot. Thus, the base station, whether base station 604 or 804, may schedule the UE to monitor for PDCCH in the SCell in slots in different slots than the base station configures for the UE to monitor for PDCCH in the PCell. For a type B (partially non-concurrent) receive chain switching for inter-band downlink CA, if a slot is scheduled for PDCCH in the PCell, the UE may assume that the configuration is for multiple receive chains, e.g., for the two receive chains 508 and 510 in FIG. 5B, to be used for reception for the PCell. If the base station configures a slot for receiving PDCCH in the SCell, then the UE may assume one receive chain provides downlink coverage for the PCell. This may help to avoid the PDCCH coverage from being affected by dynamic receive chain switching.

In some examples, if the base station does not schedule a downlink transmission in a slot from either the PCell or the SCell, the UE may maintain the state of the receive chains based on the last downlink reception. The UE may maintain the prior state of the receive chains until the next downlink transmission from the base station. A memory based option in which the UE maintains the state of the receive chains during slots in which there is no downlink transmission may help to avoid receive chain switching at every slot boundary.

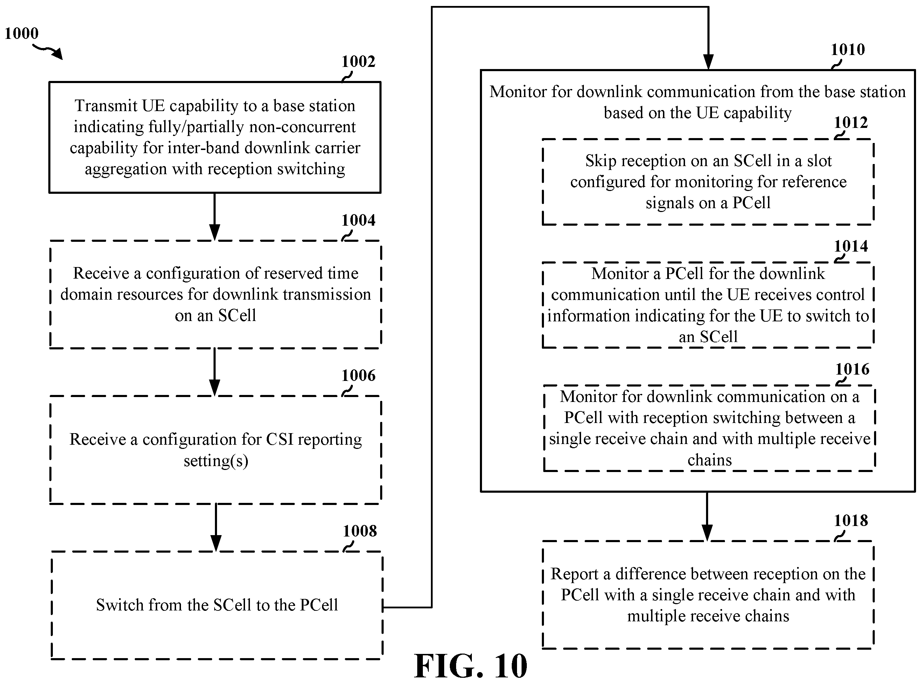

FIG. 10 is a flowchart 1000 of a method of wireless communication. The method may be performed by a UE (e.g., the UE 104, 350, 602, 802; the apparatus 1102). Optional aspects are illustrated with a dashed line. The aspects enable a reduced capability device to improve communication with a base station based on the UE's level of capability for inter-band downlink carrier aggregation with receive chain switching.

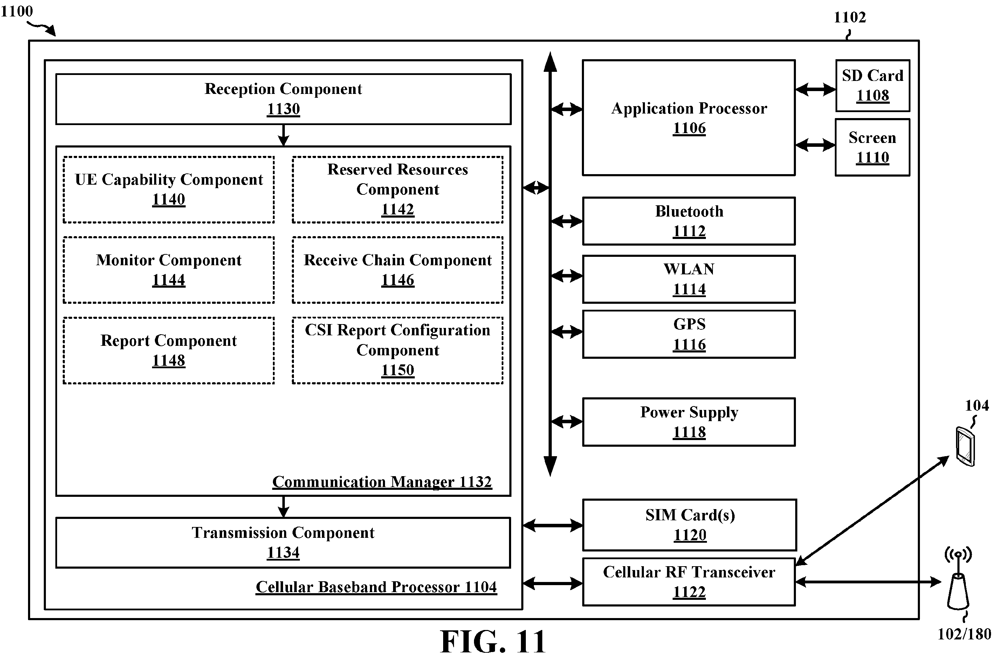

At 1002, the UE transmits a UE capability to a base station. For example, the UE capability component 1140 of the apparatus 1102 in FIG. 11 may transmit the UE capability to the base station 102 or 180. The UE capability indicates a fully non-concurrent capability or a partially non-concurrent capability for inter-band downlink carrier aggregation with reception switching. For example, FIG. 5A illustrates an example of a fully non-current capability, and FIG. 5B illustrates an example of a partially non-concurrent capability. FIG. 6 illustrates an example of a UE 602 sending an indication 603 of a fully non-concurrent capability to a base station 604. FIG. 8 illustrates an example of a UE 802 sending an indication 803 of a partially non-concurrent capability to the base station 804.

At 1010, the UE monitors for downlink communication from the base station based on the UE capability. For example, the monitor component 1144 of the apparatus 1102 in FIG. 11 may monitor for the downlink communication from the base station 102 or 180. For example, example aspects of monitoring based on a UE capability for fully non-concurrent inter-band downlink carrier aggregation with reception switching are described in connection with FIG. 6 and FIG. 7. Example aspects of monitoring based on a UE capability for partially non-concurrent inter-band downlink carrier aggregation with reception switching are described in connection with FIG. 8 and FIG. 9.

In some examples, the UE capability may be for fully non-concurrent reception switching, such as described in connection with FIG. 5A. The UE may monitor for the downlink communication, at 1010, including skipping reception on an SCell in a slot configured for monitoring for reference signals on a PCell, e.g., as illustrated at 1012. The reference signals on the PCell may include an SSB or a periodic CSI-RS for RRM or RLM.

In some examples, the UE may receive a configuration of reserved time domain resources for downlink transmission on an SCell, as illustrated at 1004. For example, the configuration may be received by the reserved resources component 1142 of the apparatus 1102 in FIG. 11. In some examples, the reserved time domain resources comprise at least a slot configured for monitoring for a PCell SSB or a periodic CSI-RS for RRM or RLM. The reserved time domain resources may be indicated to the UE based on one or more of a periodicity, a starting position, or a duration in a number of consecutive slots. FIG. 7 illustrates an example of reserved resources for an SCell.

The UE may switch from the SCell to the PCell to monitor for downlink communication during the reserved time domain resources, as illustrated at 1008. For example, the switch may be performed by the receive chain component 1146 of the apparatus 1102 in FIG. 11. FIG. 5A illustrates an example of switching a receive chain 502 between reception for a first cell (e.g., with antenna 504) and reception for a second cell (e.g., with antenna 506). In some examples, the UE may switch from the SCell to the PCell to monitor for downlink communication during the reserved time domain resources unless the UE receives DCI scheduling downlink communication on the SCell during the reserved time domain resources.

In some examples, the UE capability may be for fully non-concurrent reception switching, and the UE may monitor a PCell for the downlink communication until the UE receives control information indicating for the UE to switch to an SCell, e.g., as illustrated at 1014. The control information may include DCI, for example, that schedules downlink communication on the SCell.

In some examples, the UE capability may be for partially non-concurrent reception switching, and the UE may monitor for downlink communication on a PCell with reception switching between a single receive chain and with multiple receive chains, as illustrated at 1016.

As illustrated at 1018, the UE reports a difference between reception on the PCell with a single receive chain and with multiple receive chains, wherein the difference is based on a CQI for the single receive chain in comparison to the multiple receive chains. The report may be performed, e.g., by the report component 1148 of the apparatus 1102 in FIG. 11.

For example, at 1006, the UE may receive a configuration for a first CSI reporting setting based on the single receive chain and a second CSI reporting setting based on the multiple receive chains, and the UE may report the difference by transmitting a first CQI based on the single receive chain in the first CSI reporting setting and second CQI based on the multiple receive chains in the second CSI reporting setting. The configuration may be received, e.g., by the CSI report configuration component 1150 of the apparatus in FIG. 11. FIG. 9 illustrates an example 900 showing CQI reporting with multiple CSI reporting settings.

Alternately, at 1006, the UE may receive a configuration for a CSI reporting setting based on the single receive chain and the multiple receive chains, and the UE may report the difference by transmitting first CQI based on reception with the multiple receive chains and a differential CQI based on reception with the single receive chain. The configuration may be received, e.g., by the CSI report configuration component 1150 of the apparatus in FIG. 11. FIG. 9 illustrates an example 950 showing CQI reporting with a single CSI reporting setting.

In a slot for receiving a PDCCH, the UE may monitor for the downlink communication based on a maximum number of receive chains in a serving cell for receiving a PDCCH, for example. The slot for receiving the PDCCH on a PCell may be a different slot than the slot for receiving a PDCCH on an SCell.

In some examples, the UE may maintain a state of receive chains from a prior slot during a slot without a downlink reception. The UE may maintain the state of the receive chains until a next downlink reception. The receive chain state may be maintained, e.g., by the receive chain component 1146 of the apparatus in FIG. 11.

FIG. 11 is a diagram 1100 illustrating an example of a hardware implementation for an apparatus 1102. The apparatus 1102 is a UE and includes a cellular baseband processor 1104 (also referred to as a modem) coupled to a cellular RF transceiver 1122 and one or more subscriber identity modules (SIM) cards 1120, an application processor 1106 coupled to a secure digital (SD) card 1108 and a screen 1110, a Bluetooth module 1112, a wireless local area network (WLAN) module 1114, a Global Positioning System (GPS) module 1116, and a power supply 1118. The cellular baseband processor 1104 communicates through the cellular RF transceiver 1122 with the UE 104 and/or BS 102/180. The cellular baseband processor 1104 may include a computer-readable medium / memory. The computer-readable medium / memory may be non-transitory. The cellular baseband processor 1104 is responsible for general processing, including the execution of software stored on the computer-readable medium / memory. The software, when executed by the cellular baseband processor 1104, causes the cellular baseband processor 1104 to perform the various functions described *supra.* The computer-readable medium / memory may also be used for storing data that is manipulated by the cellular baseband processor 1104 when executing software. The cellular baseband processor 1104 further includes a reception component 1130, a communication manager 1132, and a transmission component 1134. The communication manager 1132 includes the one or more illustrated components. The components within the communication manager 1132 may be stored in the computer-readable medium / memory and/or configured as hardware within the cellular baseband processor 1104. The cellular baseband processor 1104 may be a component of the UE 350 and may include the memory 360 and/or at least one of the TX processor 368, the RX processor 356, and the controller/processor 359. In one configuration, the apparatus 1102 may be a modem chip and include just the baseband processor 1104, and in another configuration, the apparatus 1102 may be the entire UE (e.g., see 350 of FIG. 3) and include the additional modules of the apparatus 1102.

The communication manager 1132 includes a UE capability component 1140 that is configured to transmit a UE capability indicating a fully non-concurrent capability or a partially non-concurrent capability for inter-band downlink carrier aggregation with reception switching, e.g., as described in connection with 1002. The communication manager 1132 further includes a monitor component 1144 that is configured to monitor for downlink communication from the base station based on the UE capability, e.g., as described in connection with 1010. The communication manager 1132 further includes a reserved resources component 1142 configured to receive a configuration of reserved time domain resources for downlink transmission on an SCell, e.g., as described in connection with 1004. The communication manager 1132 further includes a receive chain component 1146 configured to switch from the SCell to the PCell to monitor for downlink communication, e.g., as described in connection with 1004. The communication manager 1132 further includes a report component 1148 configured to may report a difference between reception on the PCell with a single receive chain and with multiple receive chains, e.g., as described in connection with 1018. The communication manager 1132 further includes a CSI report configuration component 1150 configured to receive a configuration for one or more CSI reporting settings, e.g., as described in connection with 1006.

The apparatus may include additional components that perform each of the blocks of the algorithm in the aforementioned flowchart of FIG. 10 or the aspects performed by the UE 602 or 802. As such, each block in the aforementioned flowchart of FIG. 10 or the aspects performed by the UE 602 or 802 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

In one configuration, the apparatus 1102, and in particular the cellular baseband processor 1104, includes means for transmitting a UE capability to a base station, the UE capability indicating a fully non-concurrent capability or a partially non-concurrent capability for inter-band downlink carrier aggregation with reception switching and means for monitoring for downlink communication from the base station based on the UE capability. The apparatus 1102 may further include means for means for skipping reception on a SCell in a slot configured for monitoring for reference signals on a PCell. The apparatus 1102 may further include means for receiving a configuration of reserved time domain resources for downlink transmission on a SCell. The apparatus 1102 may further include means for switching a receive chain between a PCell and an SCell. The apparatus 1102 may further include means for monitoring for the downlink communication on a PCell with the reception switching between a single receive chain and with multiple receive chains. The apparatus 1102 may further include means for reporting a difference between reception on the PCell with the single receive chain and with the multiple receive chains, wherein the difference is based on a CQI for the single receive chain in comparison to the multiple receive chains. The apparatus 1102 may further include means for receiving a configuration for one or more CSI reporting settings. The aforementioned means may be one or more of the aforementioned components of the apparatus 1102 configured to perform the functions recited by the aforementioned means. As described *supra,* the apparatus 1102 may include the TX Processor 368, the RX Processor 356, and the controller/processor 359. As such, in one configuration, the aforementioned means may be the TX Processor 368, the RX Processor 356, and the controller/processor 359 configured to perform the functions recited by the aforementioned means.

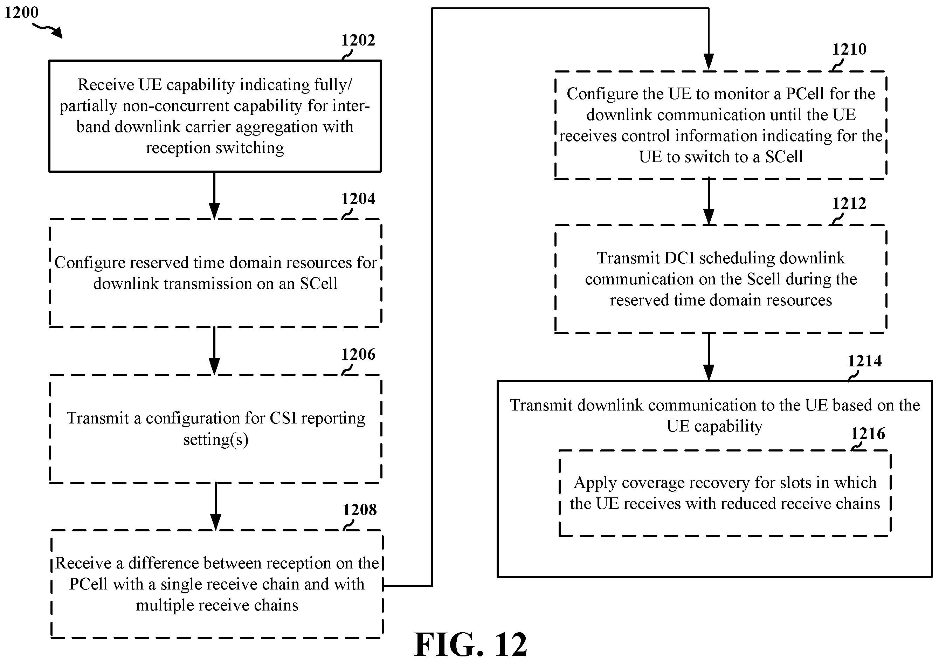

FIG. 12 is a flowchart 1200 of a method of wireless communication. The method may be performed by a base station (e.g., the base station 102/180, 310, 604, 804; the apparatus 1302. Optional aspects are illustrated with a dashed line. The aspects enable a base station to provide improved downlink communication based on a reduced capability device's level of capability for inter-band downlink carrier aggregation with receive chain switching.

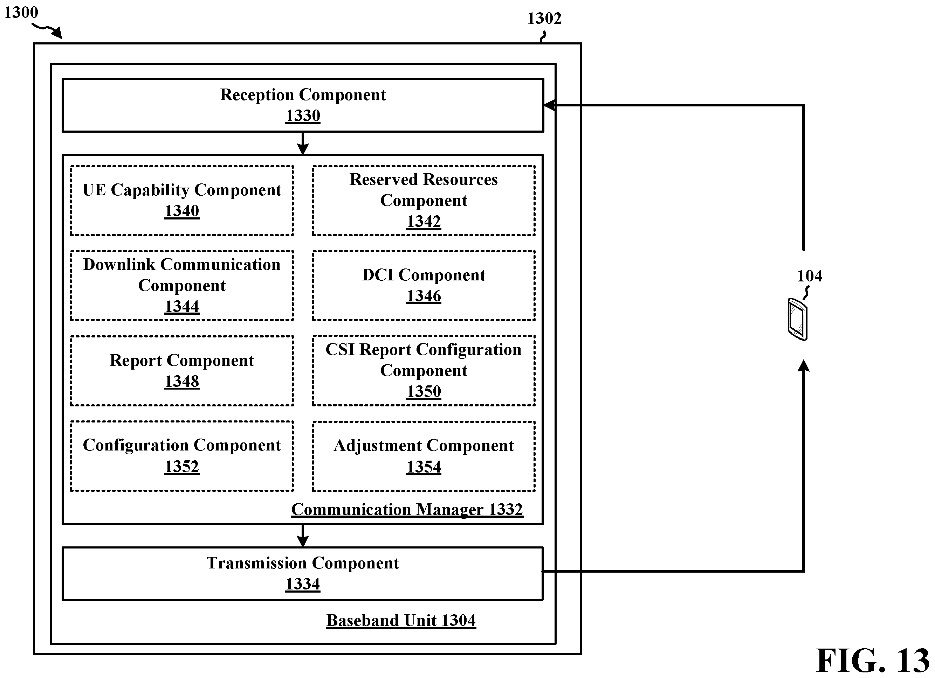

At 1202, the base station receives, from a UE, a UE capability indicating a fully non-concurrent capability or a partially non-concurrent capability for inter-band downlink carrier aggregation with reception switching. For example, the UE capability may be received by the UE capability component 1342 of the apparatus 1302 in FIG. 13. For example, FIG. 5A illustrates an example of a fully non-current capability, and FIG. 5B illustrates an example of a partially non-concurrent capability. FIG. 6 illustrates an example of a base station 604 receiving an indication 603 of a fully non-concurrent capability to a base station 604. FIG. 8 illustrates an example of a base station receiving an indication 803 of a partially non-concurrent capability to the base station 804.

At 1214, the base station transmits downlink communication to the UE based on the UE capability. The downlink communication may be transmitted, e.g., by the downlink communication component 1344 of the apparatus 1302. FIG. 6 illustrates an example of a base station 604 transmitting to a UE based on an indication 603 of a fully non-concurrent capability to a base station 604. FIG. 8 illustrates an example of a base station transmitting to a UE 802 based on receiving an indication 803 of a partially non-concurrent capability to the base station 804.

The UE capability may be for fully non-concurrent reception switching, and the base station may configure reserved time domain resources for the downlink transmission on a SCell that are reserved from downlink transmission to the UE on the SCell, as illustrated at 1204. For example, the configuration may be performed, e.g., by the reserved resources component 1342 of the apparatus 1302 in FIG. 13. In some examples, the reserved time domain resources may comprise at least a slot configured for the UE to monitor for a PCell SSB or periodic CSI-RS for RRM or RLM on a PCell. For example, the reserved time domain resources may be indicated to the UE based on one or more of: a periodicity, a starting position, or a duration in a number of consecutive slots. FIG. 7 illustrates an example of reserved resources.

In some examples, the base station may transmit DCI scheduling downlink communication on the SCell during the reserved time domain resources, e.g., as illustrated at 1212. The DCI may be transmitted, e.g., by the DCI component 1346 of the apparatus 1302 in FIG. 13.

In some examples, the UE capability may be for fully non-concurrent reception switching, and the base station may configure the UE to monitor a PCell for the downlink communication until the UE receives control information indicating for the UE to switch to a SCell, at 1210. The configuration may be performed, e.g., by the configuration component 1352 of the apparatus 1302.

In some examples, the UE capability may be for partially non-concurrent reception switching, and the base station may apply, at 1216, for slots with scheduling based on a single receive chain at the UE, one or more of a higher transmission power than for slots with multiple receive chains, repetition, a lower modulation and coding scheme than for the slots with the multiple receive chains, or a smaller transport block size than for the slots with the multiple receive chains. For example, the base station applies a coverage recovery operation for slots in which the UE will receive from the PCell with a single receive chain.

In some examples, the base station receives, from the UE, a report of a difference between reception on a PCell with the single receive chain and with multiple receive chains, at 1218. The difference may be based on a CQI for the single receive chain in comparison to the multiple receive chains. The report may be received, e.g., by the report component 1348 of the apparatus 1302 in FIG. 13.

In some examples, the base station may transmit a configuration for a first CSI reporting setting based on the single receive chain and a second CSI reporting setting based on the multiple receive chains, at 1206. The report that is received at 1208 may indicate the difference by reporting a first CQI based on the single receive chain in the first CSI reporting setting and reporting a second CQI based on the multiple receive chains in the second CSI reporting setting. The configuration may be performed, e.g., by the CSI report configuration component 1350 of the apparatus 1302 in FIG. 13. FIG. 9 illustrates an example 900 showing CQI reporting with multiple CSI reporting settings.

In some examples, the base station may transmit a configuration for a CSI reporting setting based on the single receive chain and the multiple receive chains, e.g., at 1206. The report that is received at 1208 may indicate the difference by transmitting first CQI based on reception with the multiple receive chains and a differential CQI based on reception with the single receive chain. The configuration may be performed, e.g., by the CSI report configuration component 1350 of the apparatus 1302 in FIG. 13. FIG. 9 illustrates an example 950 showing CQI reporting with s single CSI reporting setting.

In some examples, the base station may configure the UE to monitor for the downlink communication in a slot for receiving a PDCCH based on a maximum number of receive chains for the UE in a serving cell for receiving the PDCCH. The configuration may be performed, e.g., by the configuration component 1352 of the apparatus 1302 in FIG. 13. The slot for receiving the PDCCH on a PCell may be a different slot than the slot for receiving the PDCCH on an SCell.

FIG. 13 is a diagram 1300 illustrating an example of a hardware implementation for an apparatus 1302. The apparatus 1302 is a BS and includes a baseband unit 1304. The baseband unit 1304 may communicate through a cellular RF transceiver with the UE 104. The baseband unit 1304 may include a computer-readable medium / memory. The baseband unit 1304 is responsible for general processing, including the execution of software stored on the computer-readable medium / memory. The software, when executed by the baseband unit 1304, causes the baseband unit 1304 to perform the various functions described *supra.* The computer-readable medium / memory may also be used for storing data that is manipulated by the baseband unit 1304 when executing software. The baseband unit 1304 further includes a reception component 1330, a communication manager 1332, and a transmission component 1334. The communication manager 1332 includes the one or more illustrated components. The components within the communication manager 1332 may be stored in the computer-readable medium / memory and/or configured as hardware within the baseband unit 1304. The baseband unit 1304 may be a component of the BS 310 and may include the memory 376 and/or at least one of the TX processor 316, the RX processor 370, and the controller/processor 375.

The communication manager 1332 includes a UE capability component 1340 configured to receive, from a UE, a UE capability indicating a fully non-concurrent capability or a partially non-concurrent capability for inter-band downlink carrier aggregation with reception switching, e.g., as described in connection with 1202. The communication manager 1332 further includes a reserved resource component 1342 configured to configure reserved time domain resources for the downlink transmission on a SCell that are reserved from downlink transmission to the UE on the SCell, e.g., as described in connection with 1204. The communication manager 1332 further includes a downlink communication component 1344 configured to transmit downlink communication to the UE based on the UE capability, e.g., as described in connection with 1214. The communication manager 1332 further includes a DCI communication component 1346 configured to transmit DCI scheduling downlink communication on the SCell during the reserved time domain resources, e.g., as described in connection with 1212. The communication manager 1332 further includes a report component 1348 configured to receive, from the UE, a report of a difference between reception on a PCell with the single receive chain and with multiple receive chains, e.g., as described in connection with 1218. The communication manager 1332 further includes a CSI report configuration component 1350 configured to configure one or more transmit a configuration for a first CSI reporting settings, e.g., as described in connection with 1206. The communication manager 1332 further includes a configuration component 1352 configured to configure the UE to monitor a PCell for the downlink communication until the UE receives control information indicating for the UE to switch to a SCell, e.g., as described in connection with 1210. The communication manager 1332 further includes an adjustment component 1354 configured to apply, for slots with scheduling based on a single receive chain at the UE, one or more of a higher transmission power than for slots with multiple receive chains, repetition, a lower modulation and coding scheme than for the slots with the multiple receive chains, or a smaller transport block size than for the slots with the multiple receive chains, e.g., as described in connection with 1216.

The apparatus may include additional components that perform each of the blocks of the algorithm in the aforementioned flowchart of FIG. 12 or any of the aspects performed by the base station 604 or 804. As such, each block in the aforementioned flowchart of FIG. 12 or any of the aspects performed by the base station 604 or 804 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

In one configuration, the apparatus 1302, and in particular the baseband unit 1304, includes means for receiving, from a user equipment (UE), a UE capability indicating a fully non-concurrent capability or a partially non-concurrent capability for inter-band downlink carrier aggregation with reception switching and means for transmitting downlink communication to the UE based on the UE capability. The apparatus 1302 may further include means for configuring reserved time domain resources for a SCell that are reserved from downlink transmission to the UE on the SCell. The apparatus 1302 may further include means for transmitting DCI scheduling downlink communication on the SCell during the reserved time domain resources. The apparatus 1302 may further include means for configuring the UE to monitor a PCell for the downlink communication until the UE receives control information indicating for the UE to switch to a SCell. The apparatus 1302 may further include means for applying, for slots with scheduling based on a single receive chain at the UE, one or more of: a higher transmission power than for other slots with multiple receive chains, repetition, a lower modulation and coding scheme than for the slots with the multiple receive chains, or a smaller transport block size than for the slots with the multiple receive chains. The apparatus 1302 may further include means for receiving, from the UE, a report of a difference between reception on a PCell with the single receive chain and with multiple receive chains. The apparatus 1302 may further include means for transmitting a configuration for a first CSI reporting setting based on the single receive chain and a second CSI reporting setting based on the multiple receive chains or for transmitting a configuration for a CSI reporting setting based on the single receive chain and the multiple receive chains. The aforementioned means may be one or more of the aforementioned components of the apparatus 1302 configured to perform the functions recited by the aforementioned means. As described supra, the apparatus 1302 may include the TX Processor 316, the RX Processor 370, and the controller/processor 375. As such, in one configuration, the aforementioned means may be the TX Processor 316, the RX Processor 370, and the controller/processor 375 configured to perform the functions recited by the aforementioned means.

It is understood that the specific order or hierarchy of blocks in the processes / flowcharts disclosed is an illustration of example approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Terms such as "if," "when," and "while" should be interpreted to mean "under the condition that" rather than imply an immediate temporal relationship or reaction. That is, these phrases, e.g., "when," do not imply an immediate action in response to or during the occurrence of an action, but simply imply that if a condition is met then an action will occur, but without requiring a specific or immediate time constraint for the action to occur. The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. The words "module," "mechanism," "element," "device," and the like may not be a substitute for the word "means." As such, no claim element is to be construed as a means plus function unless the element is expressly recited using the phrase "means for."

## Claims

1. A method (1000) of wireless communication at a user equipment, UE, comprising:
transmitting (1002) a UE capability to a base station, the UE capability indicating a fully non-concurrent capability or a partially non-concurrent capability for inter-band downlink carrier aggregation with reception switching; and
monitoring (1010) for downlink communication from the base station on a primary cell, PCell, with the reception switching between a single receive chain and with multiple receive chains if the UE capability is for partially non-concurrent reception switching; further comprising:
reporting a difference between reception on the PCell with the single receive chain and with the multiple receive chains, wherein the difference is based on a channel quality indicator, CQI, for the single receive chain in comparison to the multiple receive chains.

2. The method of claim 1, wherein the UE capability is for fully non-concurrent reception switching, further comprising:
receiving a configuration of reserved time domain resources for downlink transmission on a secondary cell, SCell.

3. The method of claim 2, wherein the UE switches from the SCell to a primary cell, PCell, to monitor for the downlink communication during the reserved time domain resources; or wherein the UE switches from the SCell to a primary cell, PCell, to monitor for the downlink communication during the reserved time domain resources unless the UE receives downlink control information, DCI, scheduling downlink communication on the SCell during the reserved time domain resources.

4. The method of claim 1, wherein the UE capability is for fully non-concurrent reception switching, and wherein the UE monitors a primary cell, PCell, for the downlink communication until the UE receives control information indicating for the UE to switch to a secondary cell, SCell.

5. The method of claim 1, further comprising:
receiving a configuration for a first channel state information, CSI, reporting setting based on the single receive chain and a second CSI reporting setting based on the multiple receive chains, wherein the UE reports the difference by transmitting a first CQI based on the single receive chain in the first CSI reporting setting and second CQI based on the multiple receive chains in the second CSI reporting setting; or
receiving a configuration for a channel state information, CSI, reporting setting based on the single receive chain and the multiple receive chains, wherein the UE reports the difference by transmitting first CQI based on reception with the multiple receive chains and a differential CQI based on reception with the single receive chain.

6. An apparatus (1100) for wireless communication at a user equipment, UE, comprising:
means for transmitting (1130) a UE capability to a base station, the UE capability indicating a fully non-concurrent capability or a partially non-concurrent capability for inter-band downlink carrier aggregation with reception switching; and
means for monitoring (1144) for downlink communication from the base station on a primary cell, PCell, with the reception switching between a single receive chain and with multiple receive chains if the UE capability is for partially non-concurrent reception switching; further comprising:
means for reporting a difference between reception on the PCell with the single receive chain and with the multiple receive chains, wherein the difference is based on a channel quality indicator, CQI, for the single receive chain in comparison to the multiple receive chains.

7. The apparatus of claim 6, further comprising means to perform the method of any of claims 2-5.

8. A method (1200) of wireless communication at a base station, comprising:
receiving (1202), from a user equipment, UE, a UE capability indicating a fully non-concurrent capability or a partially non-concurrent capability for inter-band downlink carrier aggregation with reception switching; and
transmitting (1214) downlink communication to the UE based on the UE capability; further comprising:
receiving, from the UE, a report of a difference between reception on the PCell with the single receive chain and with the multiple receive chains, wherein the difference is based on a channel quality indicator, CQI, for the single receive chain in comparison to the multiple receive chains; and
applying, for slots with scheduling based on a single receive chain at the UE a coverage recovery approach based on the report.

9. The method of claim 8, wherein the UE capability is for fully non-concurrent reception switching, further comprising:
configuring reserved time domain resources for a secondary cell, SCell, that are reserved from downlink transmission to the UE on the SCell.

10. The method of claim 2 or 9, wherein the reserved time domain resources comprise at least a slot configured for the UE to monitor for a primary cell, Pcell, synchronization signal block, SSB, or a periodic channel station information reference signal, CSI-RS, for radio resource management, RRM, or radio link monitoring, RLM, on a Pcell.

11. The method of claim 2 or 9, wherein the reserved time domain resources are indicated to the UE based on one or more of:
a periodicity,
a starting position, or
a duration in a number of consecutive slots.

12. An apparatus (1300) for wireless communication at a base station, comprising:
means for receiving (1330), from a user equipment, UE, a UE capability indicating a fully non-concurrent capability or a partially non-concurrent capability for inter-band downlink carrier aggregation with reception switching; and
means for transmitting (1334) downlink communication to the UE based on the UE capability; further comprising:
means for receiving, from the UE, a report of a difference between reception on the PCell with the single receive chain and with the multiple receive chains, wherein the difference is based on a channel quality indicator, CQI, for the single receive chain in comparison to the multiple receive chains; and
means for applying, for slots with scheduling based on a single receive chain at the UE a coverage recovery approach based on the report.

13. The apparatus of claim 12, further comprising means to perform the method of any of claims 9 to 11.

14. A computer executable code in the form of instructions which when executed by a computer, cause the computer to perform the method of one of the claims 1 to 5 or 8 to 11.

## Patentansprüche

1. Ein Verfahren (1000) zur drahtlosen Kommunikation an einem Benutzergerät, UE, umfassend:
Übertragen (1002) einer UE-Fähigkeit an eine Basisstation, wobei die UE-Fähigkeit eine vollständig nicht-gleichzeitige Fähigkeit oder eine teilweise nicht-gleichzeitige Fähigkeit für Interband-Downlink-Trägeraggregation mit Empfangsumschaltung anzeigt; und
Überwachen (1010) auf Downlink-Kommunikation von der Basisstation auf einer Primärzelle, PCell, mit der Empfangsumschaltung zwischen einer einzelnen Empfangskette und mit mehreren Empfangsketten wenn die UE-Fähigkeit für teilweise nicht-gleichzeitige Empfangsumschaltung ist; ferner umfassend:
Berichten einer Differenz zwischen Empfang auf der PCell mit der einzelnen Empfangskette und mit den mehreren Empfangsketten, wobei die Differenz auf einem Kanalqualitätsindikator, CQI, für die einzelne Empfangskette im Vergleich zu den mehreren Empfangsketten basiert.

2. Das Verfahren nach Anspruch 1, wobei die UE-Fähigkeit für vollständig nicht-gleichzeitige Empfangsumschaltung ist, ferner umfassend:
Empfangen einer Konfiguration von reservierten Zeitbereichsressourcen für Downlink-Übertragung auf einer Sekundärzelle, SCell.

3. Das Verfahren nach Anspruch 2, wobei das UE von der SCell zu einer Primärzelle, PCell, umschaltet, um auf die Downlink-Kommunikation während der reservierten Zeitbereichsressourcen zu überwachen; oder
wobei das UE von der SCell zu einer Primärzelle, PCell, umschaltet, um auf die Downlink-Kommunikation während der reservierten Zeitbereichsressourcen zu überwachen, es sei denn, das UE empfängt Downlink-Steuerinformation, DCI, die Downlink-Kommunikation auf der SCell während der reservierten Zeitbereichsressourcen plant.

4. Das Verfahren nach Anspruch 1, wobei die UE-Fähigkeit für vollständig nicht-gleichzeitige Empfangsumschaltung ist, und wobei das UE eine Primärzelle, PCell, auf die Downlink-Kommunikation überwacht, bis das UE Steuerinformation empfängt, die anzeigt, dass das UE zu einer Sekundärzelle, SCell, umschaltet.

5. Das Verfahren nach Anspruch 1, ferner umfassend:
Empfangen einer Konfiguration für eine erste Kanalzustandsinformation, CSI, Berichtseinstellung basierend auf der einzelnen Empfangskette und eine zweite CSI Berichtseinstellung basierend auf den mehreren Empfangsketten, wobei das UE die Differenz berichtet durch Übertragen eines ersten CQI basierend auf der einzelnen Empfangskette in der ersten CSI Berichtseinstellung und eines zweiten CQI basierend auf den mehreren Empfangsketten in der zweiten CSI Berichtseinstellung; oder
Empfangen einer Konfiguration für eine Kanalzustandsinformation, CSI, Berichtseinstellung basierend auf der einzelnen Empfangskette und den mehreren Empfangsketten, wobei das UE die Differenz berichtet durch Übertragen eines ersten CQI basierend auf Empfang mit den mehreren Empfangsketten und eines differentiellen CQI basierend auf Empfang mit der einzelnen Empfangskette.

6. Eine Vorrichtung (1100) zur drahtlosen Kommunikation an einem Benutzergerät, UE, umfassend:
Mittel zum Übertragen (1130) einer UE-Fähigkeit an eine Basisstation, wobei die UE-Fähigkeit eine vollständig nicht-gleichzeitige Fähigkeit oder eine teilweise nicht-gleichzeitige Fähigkeit für Interband-Downlink-Trägeraggregation mit Empfangsumschaltung anzeigt; und
Mittel zum Überwachen (1144) auf Downlink-Kommunikation von der Basisstation auf einer Primärzelle, PCell, mit der Empfangsumschaltung zwischen einer einzelnen Empfangskette und mit mehreren Empfangsketten wenn die UE-Fähigkeit für teilweise nicht-gleichzeitige Empfangsumschaltung ist; ferner umfassend:
Mittel zum Berichten einer Differenz zwischen Empfang auf der PCell mit der einzelnen Empfangskette und mit den mehreren Empfangsketten, wobei die Differenz auf einem Kanalqualitätsindikator, CQI, für die einzelne Empfangskette im Vergleich zu den mehreren Empfangsketten basiert.

7. Die Vorrichtung nach Anspruch 6, ferner umfassend Mittel zum Durchführen des Verfahrens nach einem der Ansprüche 2 bis 5.

8. Ein Verfahren (1200) zur drahtlosen Kommunikation an einer Basisstation, umfassend:
Empfangen (1202), von einem Benutzergerät, UE, einer UE-Fähigkeit, die eine vollständig nicht-gleichzeitige Fähigkeit oder eine teilweise nicht-gleichzeitige Fähigkeit für Interband-Downlink-Trägeraggregation mit Empfangsumschaltung anzeigt; und
Übertragen (1214) von Downlink-Kommunikation an das UE basierend auf der UE-Fähigkeit; ferner umfassend:
Empfangen, von dem UE, eines Berichts einer Differenz zwischen Empfang auf der PCell mit der einzelnen Empfangskette und mit den mehreren Empfangsketten, wobei die Differenz auf einem Kanalqualitätsindikator, CQI, für die einzelne Empfangskette im Vergleich zu den mehreren Empfangsketten basiert; und
Anwenden, für Schlitze mit Planung basierend auf einer einzelnen Empfangskette an dem UE, eines Abdeckungswiederherstellungsansatzes basierend auf dem Bericht.

9. Das Verfahren nach Anspruch 8, wobei die UE-Fähigkeit für vollständig nicht-gleichzeitige Empfangsumschaltung ist, ferner umfassend:
Konfigurieren von reservierten Zeitbereichsressourcen für eine Sekundärzelle, SCell, die für Downlink-Übertragung an das UE auf der SCell reserviert sind.

10. Das Verfahren nach Anspruch 2 oder 9, wobei die reservierten Zeitbereichsressourcen mindestens einen Schlitz umfassen, der für das UE konfiguriert ist, um auf eine Primärzelle, PCell, einen Synchronisationssignalblock, SSB, oder ein periodisches Kanalstationsinformations-Referenzsignal, CSI-RS, für Funkressourcenverwaltung, RRM, oder Funkverknüpfungsüberwachung, RLM, auf einer PCell zu überwachen.

11. Das Verfahren nach Anspruch 2 oder 9, wobei die reservierten Zeitbereichsressourcen dem UE basierend auf einem oder mehreren von Folgendem angezeigt werden:
einer Periodizität,
einer Startposition, oder
einer Dauer in einer Anzahl von aufeinanderfolgenden Schlitzen.

12. Eine Vorrichtung (1300) zur drahtlosen Kommunikation an einer Basisstation, umfassend:
Mittel zum Empfangen (1330), von einem Benutzergerät, UE, einer UE-Fähigkeit, die eine vollständig nicht-gleichzeitige Fähigkeit oder eine teilweise nicht-gleichzeitige Fähigkeit für Interband-Downlink-Trägeraggregation mit Empfangsumschaltung anzeigt; und
Mittel zum Übertragen (1334) von Downlink-Kommunikation an das UE basierend auf der UE-Fähigkeit; ferner umfassend:
Mittel zum Empfangen, von dem UE, eines Berichts einer Differenz zwischen Empfang auf der PCell mit der einzelnen Empfangskette und mit den mehreren Empfangsketten, wobei die Differenz auf einem Kanalqualitätsindikator, CQI, für die einzelne Empfangskette im Vergleich zu den mehreren Empfangsketten basiert; und
Mittel zum Anwenden, für Schlitze mit Planung basierend auf einer einzelnen Empfangskette an dem UE, eines Abdeckungswiederherstellungsansatzes basierend auf dem Bericht.

13. Die Vorrichtung nach Anspruch 12, ferner umfassend Mittel zum Durchführen des Verfahrens nach einem der Ansprüche 9 bis 11.

14. Ein computerausführbarer Code in der Form von Anweisungen, die, wenn sie von einem Computer ausgeführt werden, den Computer veranlassen, das Verfahren nach einem der Ansprüche 1 bis 5 oder 8 bis 11 durchzuführen.

## Revendications

1. Un procédé (1000) de communication sans fil au niveau d'un équipement utilisateur, UE, comprenant :
la transmission (1002) d'une capacité UE à une station de base, la capacité UE indiquant une capacité totalement non simultanée ou une capacité partiellement non simultanée pour l'agrégation de porteuses de liaison descendante interbande avec commutation de réception ; et
la surveillance (1010) de communication de liaison descendante à partir de la station de base sur une cellule primaire, PCell, avec la commutation de réception entre une chaîne de réception unique et des chaînes de réception multiples si la capacité UE est pour une commutation de réception partiellement non simultanée ; comprenant en outre :
le rapport d'une différence entre la réception sur la PCell avec la chaîne de réception unique et avec les chaînes de réception multiples, dans lequel la différence est basée sur un indicateur de qualité de canal, CQI, pour la chaîne de réception unique par rapport aux chaînes de réception multiples.

2. Le procédé selon la revendication 1, dans lequel la capacité UE est pour une commutation de réception totalement non simultanée, comprenant en outre :
la réception d'une configuration de ressources de domaine temporel réservées pour une transmission de liaison descendante sur une cellule secondaire, SCell.

3. Le procédé selon la revendication 2, dans lequel l'UE commute de la SCell à une cellule primaire, PCell, pour surveiller la communication de liaison descendante pendant les ressources de domaine temporel réservées ; ou dans lequel l'UE commute de la SCell à une cellule primaire, PCell, pour surveiller la communication de liaison descendante pendant les ressources de domaine temporel réservées, sauf si l'UE reçoit une information de contrôle de liaison descendante, DCI, planifiant la communication de liaison descendante sur la SCell pendant les ressources de domaine temporel réservées.

4. Le procédé selon la revendication 1, dans lequel la capacité UE est pour une commutation de réception totalement non simultanée, et dans lequel l'UE surveille une cellule primaire, PCell, pour la communication de liaison descendante jusqu'à ce que l'UE reçoive une information de contrôle indiquant à l'UE de commuter vers une cellule secondaire, SCell.

5. Le procédé selon la revendication 1, comprenant en outre :
la réception d'une configuration pour un premier paramétrage de rapport d'information d'état de canal, CSI,
sur la base de la chaîne de réception unique et un second paramétrage de rapport CSI sur la base des chaînes de réception multiples, dans lequel l'UE rapporte la différence en transmettant un premier CQI sur la base de la chaîne de réception unique dans le premier paramétrage de rapport CSI et un second CQI sur la base des chaînes de réception multiples dans le second paramétrage de rapport CSI ; ou
la réception d'une configuration pour un paramétrage de rapport d'informations d'état de canal, CSI, sur la base de la chaîne de réception unique et des chaînes de réception multiples, dans lequel l'UE rapporte la différence en transmettant un premier CQI sur la base de la réception avec les chaînes de réception multiples et un CQI différentiel sur la base de la réception avec la chaîne de réception unique.

6. Un appareil (1100) pour la communication sans fil au niveau d'un équipement utilisateur, UE, comprenant :
un moyen pour transmettre (1130) une capacité UE à une station de base, la capacité UE indiquant une capacité totalement non simultanée ou une capacité partiellement non simultanée pour l'agrégation de porteuses de liaison descendante interbande avec commutation de réception ; et
un moyen pour surveiller (1144) une communication de liaison descendante à partir de la station de base sur une cellule primaire, PCell, avec la commutation de réception entre une chaîne de réception unique et des chaînes de réception multiples si la capacité UE est pour une commutation de réception partiellement non simultanée ; comprenant en outre :
un moyen pour rapporter une différence entre la réception sur la PCell avec la chaîne de réception unique et avec les chaînes de réception multiples, dans lequel la différence est basée sur un indicateur de qualité de canal, CQI, pour la chaîne de réception unique par rapport aux chaînes de réception multiples.

7. L'appareil selon la revendication 6, comprenant en outre des moyens pour réaliser le procédé selon l'une des revendications 2 à 5.

8. Un procédé (1200) de communication sans fil au niveau d'une station de base, comprenant :
la réception (1202), à partir d'un équipement utilisateur, UE, d'une capacité UE indiquant une capacité totalement non simultanée ou une capacité partiellement non simultanée pour l'agrégation de porteuses de liaison descendante interbande avec commutation de réception ; et
la transmission (1214) d'une communication de liaison descendante vers l'UE sur la base de la capacité UE ; comprenant en outre :
la réception, à partir de l'UE, d'un rapport d'une différence entre la réception sur la PCell avec la chaîne de réception unique et avec les chaînes de réception multiples, dans lequel la différence est basée sur un indicateur de qualité de canal, CQI, pour la chaîne de réception unique par rapport aux chaînes de réception multiples ; et
l'application, pour les slots avec planification basée sur une chaîne de réception unique au niveau de l'UE, d'une approche de recouvrement de couverture sur la base du rapport.

9. Le procédé selon la revendication 8, dans lequel la capacité UE est pour une commutation de réception totalement non simultanée, comprenant en outre :
la configuration de ressources de domaine temporel réservées pour une cellule secondaire, SCell, qui sont réservées à partir de la transmission de liaison descendante vers l'UE sur la SCell.

10. Le procédé selon la revendication 2 ou 9, dans lequel les ressources de domaine temporel réservées comprennent au moins un slot configuré pour que l'UE surveille un bloc de signal de synchronisation, SSB, de cellule primaire, Pcell, ou un signal de référence d'information d'état de canal, CSI-RS, périodique pour la gestion de ressources radio, RRM, ou surveillance de liaison radio, RLM, sur une Pcell.

11. Le procédé selon la revendication 2 ou 9, dans lequel les ressources de domaine temporel réservées sont indiquées à l'UE sur la base d'un ou plusieurs parmi :
une périodicité,
une position de départ, ou
une durée dans un certain nombre de slots consécutifs.

12. Un appareil (1300) pour la communication sans fil au niveau d'une station de base, comprenant :
un moyen pour recevoir (1330), à partir d'un équipement utilisateur, UE, une capacité UE indiquant une capacité totalement non simultanée ou une capacité partiellement non simultanée pour l'agrégation de porteuses de liaison descendante interbande avec commutation de réception ; et
un moyen pour transmettre (1334) une communication de liaison descendante vers l'UE sur la base de la capacité UE ; comprenant en outre :
un moyen pour recevoir, à partir de l'UE, un rapport d'une différence entre la réception sur la PCell avec la chaîne de réception unique et avec les chaînes de réception multiples, dans lequel la différence est basée sur un indicateur de qualité de canal, CQI, pour la chaîne de réception unique par rapport aux chaînes de réception multiples ; et
un moyen pour appliquer, pour les slots avec planification basée sur une chaîne de réception unique au niveau de l'UE,
une approche de recouvrement de couverture sur la base du rapport.

13. L'appareil selon la revendication 12, comprenant en outre des moyens pour réaliser le procédé selon l'une des revendications 9 à 11.

14. Un code exécutable par calculateur sous la forme d'instructions qui, lorsqu'elles sont exécutées par un calculateur, amènent le calculateur à réaliser le procédé selon une des revendications 1 à 5 ou 8 à 11.
